# FASCICULE DE BREVET EUROPEEN

(11) **EP 2 636 120 B1**
(45) Date de publication et mention de la délivrance du brevet: **10.12.2014**
(21) Numéro de dépôt: 11832139.7
(22) Date de dépôt: 28.10.2011
(51) Int. Cl.: H02J 7/35, E06B 9/68

(54) **PILOTAGE DE SYSTEMES DYNAMIQUES PAR MESURE DE COURANT DE COURT-CIRCUIT D'UN GENERATEUR PHOTOVOLTAIQUE**
STEUERUNG DYNAMISCHER SYSTEME DURCH MESSUNG DES KURZSCHLUSSSTROMS EINES PHOTOVOLTAIK-GENERATORS
CONTROLLING DYNAMIC SYSTEMS BY MEASURING THE SHORT CIRCUIT CURRENT OF A PHOTOVOLTAIC GENERATOR

(30) Priorité: 02.11.2010 FR 1059019
(43) Date de publication de la demande: 11.09.2013
(73) Titulaire: BUBENDORFF, 68220 Attenschwiller (FR); Commissariat à l'Énergie Atomique et aux Énergies Alternatives, 75015 Paris (FR)
(72) Inventeur: RENZI, Virginie, F - 73000 Chambery (FR); CHAINTREUIL, Nicolas, F - 73800 Montmelian (FR); DELPY, Vincent, F - 68150 Sierentz (FR); PERICHON, Pierre, 38500 Voiron (FR)
(74) Mandataire: Rhein, Alain
(86) Numéro de dépôt international: PCT/FR2011/052535
(87) Numéro de publication internationale: WO 2012/059673

(56) Documents cités:
- DE-A1- 3 408 396
- DE-A1- 4 208 469
- US-A1- 2006 000 558

## Description

La présente invention concerne un procédé pour le pilotage d'un système dynamique que comporte un équipement dynamique, ceci en fonction de l'ensoleillement.

Cette invention a, également, trait à un équipement dynamique comportant un système dynamique, un générateur photovoltaïque ainsi qu'un dispositif pour piloter cet équipement dynamique en fonction de l'ensoleillement.

Cette invention concerne le domaine de la fabrication des équipements dynamiques autonomes en énergie et comportant un système dynamique, un générateur photovoltaïque ainsi qu'une batterie alimentée en énergie électrique par le générateur photovoltaïque et alimentant en énergie électrique le système dynamique.

On connaît, d'ores et déjà, des équipements dynamiques de ce type et adoptant la forme d'un dispositif d'occultation comme un store ou analogue.

En particulier, dans le document US-5.675.487 il est décrit un dispositif pour contrôler l'énergie au travers d'une vitre. Ce dispositif comporte un store, constituant un système dynamique, des générateurs photovoltaïques, une batterie ainsi que des capteurs de luminosité conçus pour capter la lumière du soleil et fournissant une information sur la base de laquelle le système dynamique est piloté.

On connaît, également, le document FR-2.740.825 relatif à une installation de commande d'éléments de protection solaire. Une telle installation comporte des éléments de protection solaire ainsi que des moyens pour actionner ces éléments. Cette installation comporte, également, un système automatique de contrôle de l'ombre. Ce système comporte un capteur, déporté par rapport aux actionneurs, et équipé de moyens de mesure de l'intensité du rayonnement solaire et de moyens de mesure d'au moins un autre phénomène météorologique. Ce système comporte, encore, des moyens d'alimentation du capteur en énergie électrique, ces moyens d'alimentation étant, notamment, constitués par un générateur photovoltaïque.

Dans le document WO2010/079407 il est décrit un procédé de fonctionnement d'une installation domotique de protection solaire motorisé. Cette installation comporte un store, un générateur photovoltaïque servant de capteur d'énergie, une batterie ainsi qu'un capteur solaire déporté qui, en cas de détection d'un ensoleillement direct, pilote le déploiement du store. Le document DE3408396 montre un equipement suivant le préambule de la revendication 9. Dans cet equipement le générateur photovoltaïque est utilisé comme détecteur d'ensoleillement.

Quoi qu'il en soit, les équipements dynamiques de l'état de la technique comportent, d'une part, un générateur photovoltaïque usuellement employé pour charger en énergie électrique une batterie destinée à alimenter un système dynamique que comporte un tel élément dynamique et, d'autre part, un capteur solaire, conçu pour détecter un rayonnement solaire dans le but de piloter le système dynamique, venant s'ajouter au générateur photovoltaïque et déporté par rapport au système dynamique.

Outre le fait qu'un tel capteur solaire constitue un élément additionnel de l'équipement dynamique, celui-ci peut être déporté par rapport au système dynamique et être, alors, positionné en un endroit non représentatif des conditions environnantes de ce système dynamique, notamment dans une zone ombrée. De plus, un tel capteur est usuellement éloigné du système dynamique à piloter de sorte qu'il convient d'assurer la transmission de l'information captée par ce capteur à ce système dynamique. Une telle transmission peut être réalisée, soit par une liaison filaire nécessitant un câble électrique, peu pratique à mettre en place, voire disgracieux, soit une liaison radio ou wifi nécessitant au moins un récepteur au niveau du système dynamique et représentant une solution plus onéreuse que la liaison filaire.

La présente invention se veut à même de remédier aux inconvénients des équipements dynamiques de l'état de la technique.

A cet effet, l'invention concerne un procédé pour le pilotage, en fonction de l'ensoleillement, d'un système dynamique que comporte un équipement dynamique lequel comporte encore au moins un générateur photovoltaïque, au moins une batterie pour le stockage de l'énergie électrique fournie par le générateur photovoltaïque et pour l'alimentation en énergie électrique d'un système dynamique et au moins un dispositif pour le pilotage de cet équipement dynamique.

Ce procédé consiste en ce que :
- on isole électriquement le générateur photovoltaïque par rapport à la batterie ;
- on relève le courant de court-circuit Icc du générateur photovoltaïque isolé ;
- à partir d'au moins un relevé de courant de court-circuit Icc, on détermine une valeur numérique Ipv correspondant à ce ou ces relevés de courant de court-circuit Icc et on compare cette valeur numérique déterminée Ipv à au moins une valeur seuil de référence (Iseuill ; Iseuil2);
- lorsque cette valeur numérique déterminée Ipv correspond à une gamme de valeurs limitée par au moins une telle valeur seuil de référence (Iseuil1 ; Iseuil2), on pilote le système dynamique pour lui conférer une configuration correspondant à cette gamme de valeurs.

De manière additionnelle, le procédé consiste, encore, en ce que, avant de piloter le système dynamique :
- on isole électriquement le générateur photovoltaïque par rapport à la batterie ;
- on relève la tension à vide Vo du générateur photovoltaïque ;
- à partir de la tension à vide relevée Vo, on détermine une valeur numérique Vpv correspondant à cette tension à vide relevée Vo ;
- et, lorsqu'on pilote le système dynamique, on pilote ce système dynamique pour lui conférer une configuration déterminée en fonction d'au moins une des valeurs numériques déterminées Ipv et/ou Ipv et Vpv.

L'invention concerne, également, un équipement dynamique, notamment pour la mise en oeuvre du procédé selon l'une quelconque des revendications précédentes, comportant un système dynamique, un générateur photovoltaïque, une batterie alimentée en énergie électrique par le générateur photovoltaïque et alimentant en énergie électrique le système dynamique, et au moins un dispositif pour piloter cet équipement dynamique en fonction de l'ensoleillement.

Cet équipement dynamique est caractérisé par le fait que le dispositif pour piloter l'équipement dynamique comporte au moins:
- un moyen pour isoler électriquement le générateur photovoltaïque par rapport à la batterie ;
- un moyen pour relever le courant de court-circuit Icc du générateur photovoltaïque ;
- un moyen pour déterminer une valeur numérique Ipv correspondant à au moins un relevé de courant de court-circuit Icc;
- un moyen pour comparer cette valeur numérique déterminée Ipv à au moins une valeur seuil de référence (Iseuil1 ; Iseuil2);
- un moyen pour commander au moins ledit moyen pour isoler, ledit moyen pour déterminer une valeur numérique Ipv ainsi que ledit moyen pour comparer ;
- un moyen pour piloter le système dynamique en fonction du résultat de la comparaison entre cette valeur numérique déterminée Ipv et au moins une telle valeur seuil de référence (Iseuil1 ; Iseuil2).

De manière additionnelle, cet équipement dynamique comporte, encore :
- un autre moyen pour isoler électriquement le générateur photovoltaïque par rapport à la batterie ;
- un moyen pour relever la tension à vide Vo du générateur photovoltaïque ;
- un moyen pour déterminer une valeur numérique Vpv correspondant à cette tension à vide relevée Vo ;
- un moyen pour comparer cette valeur numérique déterminée Vpv à au moins une valeur seuil de référence (Vseuil1 ; Vseuil2);
- un moyen pour commander au moins le moyen pour isoler électriquement, le moyen pour déterminer une valeur numérique Vpv ainsi que le moyen pour comparer ;
- un moyen pour piloter le système dynamique en fonction du résultat de la comparaison entre cette valeur numérique déterminée Vpv et au moins une telle valeur seuil de référence (Vseuil1 ; Vseuil2).

La présente invention consiste à relever au moins un courant de court-circuit du générateur photovoltaïque et, à partir d'au moins un relevé de courant de court-circuit, à piloter l'équipement dynamique, plus particulièrement le système dynamique que comporte cet équipement dynamique. Cette invention consiste, alors avantageusement, à mettre à profit une grandeur électrique fournie directement par le générateur photovoltaïque pour piloter cet équipement dynamique et non plus, comme dans l'état de la technique, à devoir faire appel à un capteur additionnel qui plus est déporté pour assurer un tel pilotage.

Dans le cas particulier d'un équipement dynamique constitué par un dispositif d'occultation, le pilotage de cet équipement dynamique en fonction du courant de court-circuit permet, avantageusement, d'assurer une fermeture partielle ou avec ajours du système dynamique, plus particulièrement constitué par un tablier de volet roulant, ceci en fonction de l'ensoleillement.

La présente invention consiste, également, à relever la tension à vide du générateur photovoltaïque et, à partir de cette tension à vide relevée, à piloter l'équipement dynamique. Là encore l'invention consiste à mettre à profit une grandeur fournie directement par le générateur photovoltaïque pour piloter l'équipement dynamique.

En particulier, la mesure de la tension à vide permet, avantageusement, de détecter le lever/coucher du soleil et, ainsi, d'assurer un pilotage crépusculaire de l'équipement dynamique.

Dans le cas particulier d'un équipement dynamique constitué par un dispositif d'occultation, notamment un volet roulant ou analogue, l'utilisation de la tension à vide du générateur photovoltaïque permet, avantageusement, d'assurer une ouverture/fermeture crépusculaire d'un système dynamique, plus particulièrement constitué par un tablier de volet roulant.

Quoi qu'il en soit, la présente invention permet, avantageusement, de piloter un équipement dynamique (plus particulièrement un système dynamique que comporte un tel équipement dynamique), ceci à partir de grandeurs électriques fournies directement par le générateur photovoltaïque et non pas, comme dans l'état de la technique, par un capteur additionnel, voire déporté.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et en élévation d'un équipement dynamique constitué par un volet roulant ;
- la figure 2 est un graphique représentant, en fonction du temps, l'évolution du rayonnement solaire résultant d'une irradiation solaire et du courant de court circuit d'un générateur photovoltaïque soumis à cette irradiation solaire ;
- la figure 3 est un graphique représentant, en fonction du temps, l'évolution du rayonnement solaire résultant d'une irradiation solaire et de la tension à vide d'un générateur photovoltaïque soumis à cette irradiation solaire ;
- la figure 4 correspond à un agrandissement du graphique représenté figure 3 ;
- la figure 5 est représentation synoptique d'un équipement dynamique conforme à l'invention ;
- la figure 6 est une représentation synoptique d'un équipement dynamique conforme à l'invention et correspondant à un mode de réalisation plus évolué que celui illustré figure 5 ;
- la figure 7 est un logigramme illustrant le procédé de pilotage d'un équipement dynamique en fonction de l'ensoleillement.

La présente invention concerne le domaine de la fabrication des équipements dynamiques autonomes en énergie.

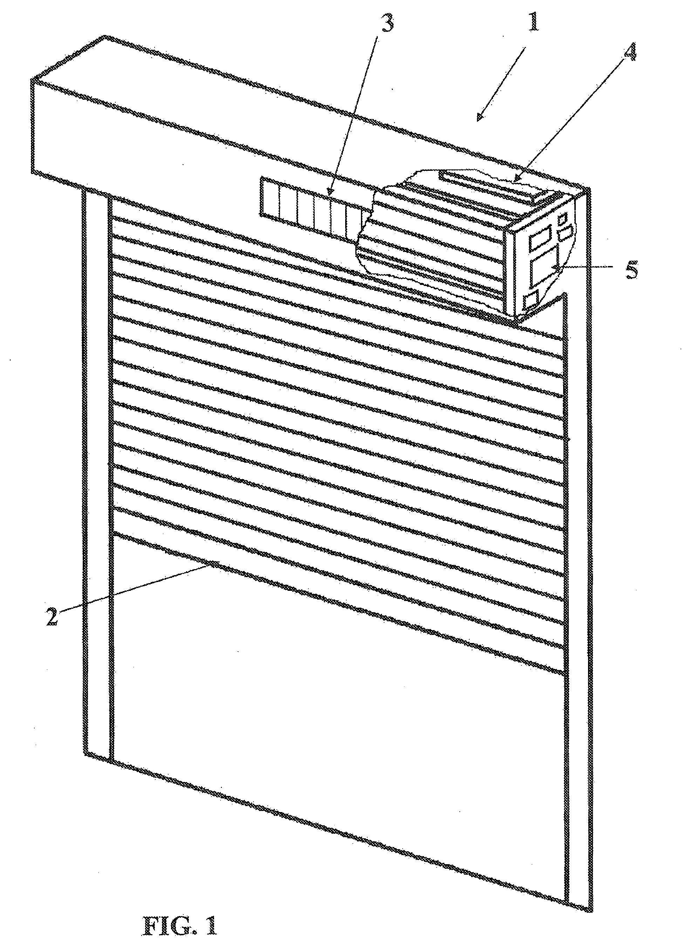

De manière non limitative, un tel équipement dynamique peut être constitué par un équipement de chauffage, un équipement de climatisation, un équipement de ventilation, un équipement de gestion de l'énergie centralisée (de type GTB, GTC ou autre), un équipement de protection solaire ou autre. Un tel équipement dynamique peut, encore, être constitué par un volet roulant qui correspond à un mode particulier de réalisation d'un tel équipement dynamique auquel il sera plus particulièrement fait référence dans la suite de la description et qui a été illustré figure 1.

Quel que soit cet équipement dynamique 1, celui-ci comporte un système dynamique 2 qui, dans le cas particulier d'un volet roulant, est constitué par au moins un tablier résultant de l'assemblage d'une pluralité de lames, voire encore par un arbre motorisé sur lequel est enroulé et à partir duquel est déroulé ledit tablier.

Un tel équipement dynamique 1 comporte, encore, un générateur photovoltaïque 3, plus particulièrement constitué par au moins un panneau photovoltaïque, qui, dans le cas particulier d'un volet roulant, peut être rapporté sur un caisson que comporte ce volet roulant et qui incorpore ledit arbre motorisé.

Un tel équipement dynamique 1 comporte, également, une batterie 4, alimentée en énergie électrique par le générateur photovoltaïque, et alimentant en énergie électrique le système dynamique 2. Dans le cas particulier d'un volet roulant, une telle batterie 4 est, là encore, implantée dans le caisson.

Finalement, cet équipement dynamique 1 comporte un dispositif 5 pour le pilotage de cet équipement dynamique 1. Un mode de réalisation préféré consiste en ce qu'un tel dispositif de pilotage 5 est au moins en partie constitué par une carte électronique, notamment implantée à l'intérieur d'un caisson de volet roulant.

Tel que mentionné ci-dessus, un tel équipement dynamique 1 comporte un générateur photovoltaïque 3 conçu pour recevoir une irradiation solaire et pour fournir de l'énergie électrique à ladite batterie 4 sous l'effet de cette irradiation solaire.

Selon une première démarche inventive, il a été imaginé de relever le courant de court circuit Icc du générateur photovoltaïque 3, ceci sous l'effet d'une irradiation solaire.

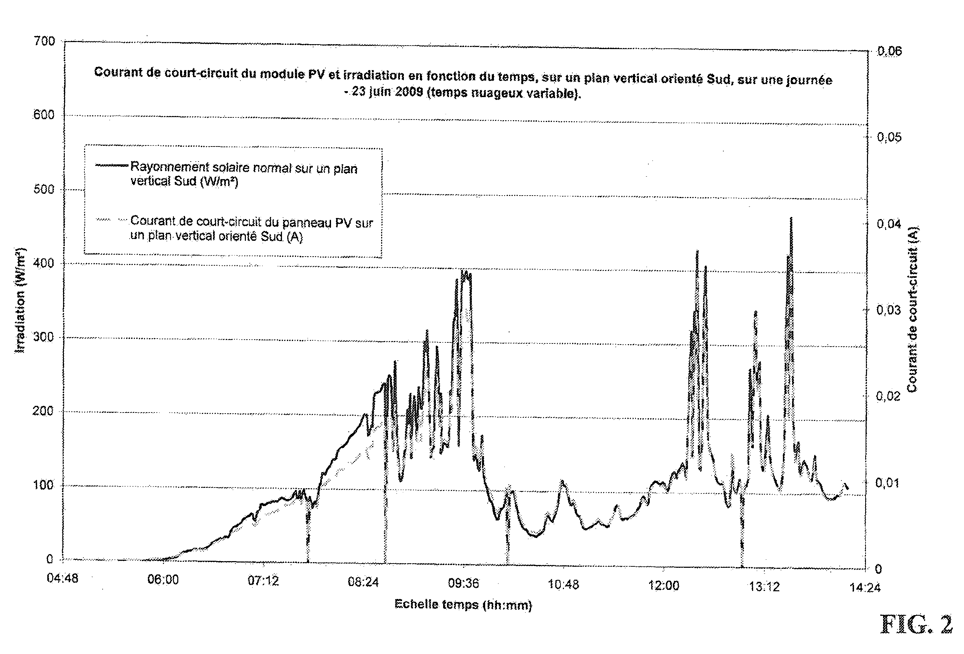

Aussi, sur un graphique faisant l'objet de la figure 2, il a été représenté, en fonction du temps, l'évolution de ce courant de court-circuit Icc (en Ampère), ceci au cours d'une journée et sous l'effet d'une telle irradiation solaire.

Sur ce même graphique de la figure 2, il a été représenté, là encore en fonction du temps, l'évolution du rayonnement solaire (mesuré à l'aide d'un pyranomètre ou analogue et donné en W/m2) auquel était soumis le générateur photovoltaïque 3, ceci au cours de cette même journée et sous l'effet de cette même irradiation solaire.

La représentation conjointe de l'évolution du courant de court-circuit Icc et du rayonnement solaire a permis de mettre en évidence une corrélation directe entre ces deux grandeurs.

Cette corrélation a conduit les inventeurs à développer la présente invention consistant à piloter le fonctionnement d'un équipement dynamique 1 en fonction de l'ensoleillement, ceci sur la base de mesures de courant de court-circuit Icc du générateur photovoltaïque 3.

Selon une deuxième démarche inventive, il a été imaginé de relever, aux bornes de ce générateur photovoltaïque 3, une tension à vide Vo délivrée sous l'effet d'une irradiation solaire.

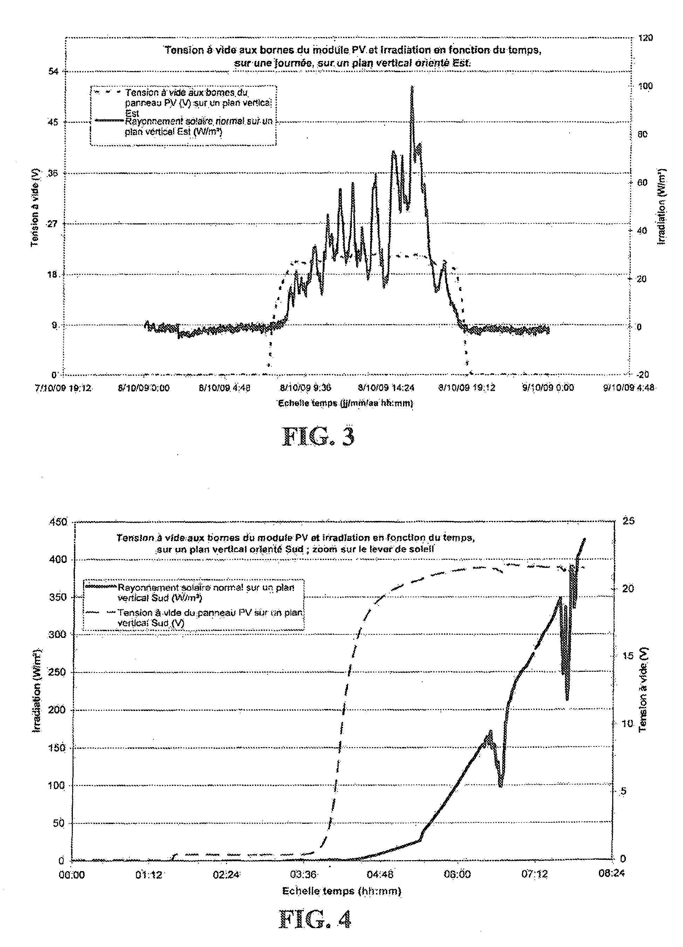

Ainsi, sur les graphiques faisant l'objet des figures 3 et 4, il a été représenté, en fonction du temps, l'évolution de cette tension à vide Vo (en Volts), ceci au cours d'une journée et sous l'effet d'une telle irradiation solaire.

Sur ces mêmes graphiques des figures 3 et 4, il a été représenté, là encore en fonction du temps, l'évolution du rayonnement solaire (là encore mesuré à l'aide d'un pyranomètre ou analogue et donné en W/m2) auquel est soumis le générateur photovoltaïque 3, ceci au cours de cette même journée et sous l'effet de cette même irradiation solaire.

La représentation conjointe de l'évolution de la tension à vide Vo et du rayonnement solaire a permis de mettre en évidence que :
- l'augmentation du rayonnement solaire, correspondant au lever du soleil, correspond, sensiblement, à une augmentation de la tension à vide Vo du générateur photovoltaïque 3;
- la diminution du rayonnement solaire, correspondant au coucher du soleil, correspond, sensiblement, à une diminution de cette tension à vide Vo.

La corrélation entre le rayonnement solaire et la tension à vide Vo du générateur photovoltaïque 3 a conduit les inventeurs à développer la présente invention consistant à piloter le fonctionnement d'un équipement dynamique 1 en fonction de l'ensoleillement, ceci sur la base de mesures de tension à vide Vo aux bornes du générateur photovoltaïque 3.

La présente invention consiste, en fait, en un procédé pour le pilotage d'un équipement dynamique 1 (plus particulièrement d'un système dynamique 2 que comporte un tel équipement dynamique 1), ceci en fonction de l'ensoleillement.

Selon l'invention, ce procédé de pilotage consiste en ce que :
- on isole électriquement le générateur photovoltaïque 3 par rapport à la batterie 4;
- on relève le courant de court-circuit Icc du générateur photovoltaïque 3 isolé ;
- à partir d'au moins un relevé de courant de court-circuit Icc, on détermine une valeur numérique Ipv correspondant à ce ou ces relevés de courant de court-circuit Icc et on compare cette valeur numérique déterminée Ipv à au moins une valeur seuil de référence (Iseuil1 ; Iseuil2);
- lorsque cette valeur numérique déterminée Ipv correspond à une gamme de valeurs limitée par au moins une telle valeur seuil de référence (Iseuil1 ; Iseuil2), on pilote le système dynamique 2 pour lui conférer une configuration correspondant à cette gamme de valeurs.

En fait et selon un mode préféré de réalisation de l'invention, ce procédé consiste en ce que :
- on procède, de manière espacée dans le temps, à un relevé de courant de court-circuit Icc aux bornes du générateur photovoltaïque 3 isolé ;
- pour chaque relevé de courant de court-circuit Icc on détermine une valeur numérique intermédiaire Ipv' correspondant à un tel relevé de courant de court-circuit Icc ;
- on détermine une valeur numérique Ipv en calculant la moyenne des valeurs numériques intermédiaires Ipv' correspondant à une pluralité de ces relevés de courant de court-circuit Icc ;
- on compare cette valeur numérique Ipv déterminée à au moins une valeur seuil de référence (Iseuil1 ; Iseuil2);
- on pilote le système dynamique 2 en fonction du résultat de cette comparaison.

De manière préférentielle, lorsqu'on détermine une valeur numérique Ipv, on calcule la moyenne des valeurs numériques intermédiaires Ipv' correspondant à un nombre N déterminé de relevés de courant de court-circuit Icc choisis parmi les derniers relevés de courant de court-circuit Icc réalisés.

En fait, ce nombre N varie de 2 à 10 et est, de préférence, égal à 5.

Un tel mode de réalisation consiste, alors, à effectuer une moyenne glissante des valeurs numérique intermédiaires Ipv', ceci pour déterminer une valeur numérique Ipv à comparer à au moins une valeur seuil de référence (Iseuill ; Iseuil2).

De manière additionnelle, le procédé consiste en ce qu'on isole le générateur photovoltaïque 3, on relève le courant de court-circuit Icc, on détermine la valeur numérique Ipv correspondant à au moins un relevé de courant de court-circuit Icc et on compare cette valeur numérique déterminée Ipv à au moins une valeur seuil de référence (Iseuill ; Iseuil2), ceci à intervalles déterminés et/ou réguliers.

En fait, un tel intervalle est choisi en fonction du besoin de l'application et des composants électroniques de l'équipement dynamique 1.

Plus particulièrement, cet intervalle est compris entre 2 et 15 minutes, de préférence de l'ordre de 5 minutes.

On observera qu'un tel intervalle est suffisamment précis pour détecter un changement météorologique.

Ainsi, d'une part, en mettant en oeuvre ce procédé à intervalle régulier (par exemple 5 minutes) et, d'autre part, en déterminant une valeur numérique Ipv en calculant la moyenne des valeurs numériques intermédiaires Ipv' correspondant à un nombre N déterminé de relevés de courant de court-circuit Icc (par exemple N=5), on pilote le système dynamique 2 de manière suffisamment précise pour détecter un changement météorologique, ceci tout en lissant les passages nuageux.

Selon une autre caractéristique du procédé, on isole le générateur photovoltaïque 3, on relève le courant de court-circuit Icc, on détermine la valeur numérique Ipv correspondant à au moins un relevé de courant de court-circuit Icc, et on compare cette valeur numérique déterminée Ipv à au moins une valeur seuil de référence (Iseuil1 ; Iseuil2), ceci de manière successive.

Tel que mentionné ci-dessus, une étape du procédé consiste en ce qu'on isole électriquement le générateur photovoltaïque 3.

A ce propos, on observera qu'une telle isolation électrique du générateur photovoltaïque 3 est réalisée de manière temporaire, ceci au moins pendant la durée nécessaire pour permettre la mise en oeuvre du procédé de pilotage susmentionné alors que le reste du temps le générateur photovoltaïque 3 est raccordé à la batterie 4 pour son chargement.

En fait, on observera qu'on isole ce générateur photovoltaïque 3 au moins pendant qu'on relève le courant de court-circuit Icc de ce générateur photovoltaïque 3, voire encore pendant qu'on détermine une valeur numérique Ipv correspondant à au moins un relevé de courant de court-circuit Icc et/ou pendant qu'on compare cette valeur numérique déterminée Ipv à au moins une valeur seuil de référence (Iseuil1 ; Iseuil2).

Une autre étape de ce procédé consiste en ce qu'on détermine une valeur numérique Ipv ou une valeur numérique intermédiaire Ipv', correspondant à un relevé de courant de court-circuit Icc.

Aussi, lorsqu'on détermine une telle valeur numérique Ipv, respectivement une telle valeur numérique intermédiaire Ipv', on convertit tout d'abord le courant de court-circuit relevé Icc en une tension Vcc et on convertit, ensuite et en une valeur numérique Ipv, respectivement en une valeur numérique intermédiaire Ipv', correspondant à cette tension Vcc et à ce courant de court-circuit relevé Icc, cette tension Vcc ou une amplification de cette tension Vcc.

Encore une autre étape de ce procédé consiste en ce qu'on compare la valeur numérique déterminée Ipv à au moins une valeur seuil de référence (Iseuil1 ; Iseuil2).

Cependant, avant de comparer cette valeur numérique déterminée Ipv à au moins une telle valeur seuil de référence (Iseuil1 ; Iseuil2), on paramètre une telle valeur seuil de référence (Iseuil1 ; Iseuil2), soit en réglant un potentiomètre ajustable (notamment que comporte le dispositif de pilotage 5), soit en enregistrant une telle valeur seuil de référence (Iseuil1 ; Iseuil2) dans une mémoire (notamment que comporte ce dispositif de pilotage 5).

En fait, on paramètre une telle valeur seuil de référence (Iseuill ; Iseuil2) en fonction de valeurs relevées dans la littérature et/ou de valeurs déterminées expérimentalement (plus particulièrement par l'intermédiaire de sondes de température, de capteurs, notamment de capteurs d'irradiation) et/ou de valeurs déterminées par simulation numérique (plus particulièrement par l'intermédiaire de solveurs d'équations de type EES ou Scilab, de logiciels de calcul de type Matlab, de logiciels de simulation dynamique de type TRNSYS, Ecotect, Energy Plus ou analogue) et/ou de valeurs déterminées par calcul (plus particulièrement par l'intermédiaire d'équations, d'abaques ou autres).

Une caractéristique additionnelle consiste en ce que, lorsqu'on relève le courant de court-circuit Icc du générateur photovoltaïque 3 isolé, on relève également la température T du dispositif de pilotage 5 et, soit on autorise le pilotage du système dynamique 2 lorsque cette température T est supérieure à une température seuil Ts, soit on inhibe le pilotage de ce système dynamique 2 lorsque cette température T est inférieure à cette température seuil Ts.

On observera que cette température seuil Ts a été déterminée préalablement de façon expérimentale, validée par simulation pour l'application choisie, et pourra être ajustée en fonction du besoin. Un mode particulier de réalisation consiste en ce que la température seuil Ts est comprise entre 0 et 10°C, plus particulièrement de l'ordre de 5°C.

Tel que mentionné ci-dessus, l'équipement dynamique 1 comporte un générateur photovoltaïque 3 ainsi qu'une batterie 4, alimentée par ce générateur photovoltaïque 3, et alimentant en énergie électrique le système dynamique 2. A ce propos, on observera que la quantité d'énergie stockée dans cette batterie 4 peut être insuffisante pour actionner ce système dynamique 2, en particulier en cas de ressource solaire insuffisante pendante un durée prolongée. Afin de palier cet inconvénient, l'équipement dynamique 1 est conçu pour permettre l'alimentation du système dynamique 2 par une source de tension externe (par exemple une alimentation secteur ou une batterie de secours).

Aussi, au moment de mettre en oeuvre le procédé de pilotage conforme à l'invention, le courant de court circuit Icc peut atteindre une valeur destructive pour le moyen 56 pour isoler électriquement le générateur photovoltaïque 3 et/ou pour une partie au moins du moyen 57 pour déterminer une valeur numérique Ipv correspondant à au moins un relevé de courant de court circuit Icc (plus particulièrement le convertisseur courant-tension 570).

Aussi et selon une caractéristique additionnelle de l'invention, avant d'isoler électriquement le générateur photovoltaïque 3, on assure la protection de ce moyen 56 pour isoler électriquement le générateur photovoltaïque 3 et/ou de cette partie au moins du moyen 57 pour déterminer une valeur numérique Ipv correspondant à au moins un relevé de courant de court circuit Icc, ceci lorsque le courant de court circuit Icc est supérieur à une valeur de consigne définie.

Selon un mode de réalisation préféré cette valeur de consigne est définie pour être, d'une part, supérieure au courant maximum délivrable par le générateur photovoltaïque 3 et, d'autre part, inférieure au courant destructif du moyen 56 pour isoler électriquement le générateur photovoltaïque 3 et/ou d'une partie au moins du moyen 57 pour déterminer une valeur numérique Ipv.

En fait, lorsque le moyen 56 pour isoler le générateur photovoltaïque 3 est au moins en partie constitué par un relais électromécanique, on assure une telle protection en limitant le courant de court circuit Icc (notamment en écrêtant ce courant de court-circuit Icc) ce qui a pour effet d'interrompre (au moins pendant une durée donnée, notamment quelques minutes) la commande, par le moyen de commande 59, de ce moyen 56 pour isoler le générateur photovoltaïque 3.

Cependant, lorsque ce moyen 56 pour isoler comporte une diode à très faible courant de fuite ainsi qu'un transistor de commutation, on assure une telle protection en limitant la conduction de ce moyen 56 pour isoler (plus particulièrement pour limiter la conduction du transistor que comporte ce moyen 56).

Le procédé décrit ci-dessus permet, en fait, de piloter l'équipement dynamique 1 (plus particulièrement au moins le système dynamique 2) en fonction de l'ensoleillement.

En fait et tel que mentionné ci-dessus, ce procédé de pilotage consiste en ce que, lorsque la valeur numérique déterminée Ipv correspond à une gamme de valeurs limitée par au moins une valeur seuil de référence (Iseuil1 ; Iseuil2), on pilote le système dynamique 2 pour lui conférer une configuration correspondant à cette gamme de valeurs.

Ainsi et selon un mode particulier de réalisation de l'invention, ce procédé de pilotage peut consister en ce que, lorsque la valeur numérique déterminée Ipv est inférieure à une première valeur seuil de référence Iseuil1, on pilote le système dynamique 2 pour lui conférer une première configuration.

Dans le cas particulier d'un équipement dynamique 1 constitué par un volet roulant, cette première configuration peut être constituée par une position de fermeture complète du tablier de ce volet roulant.

Ce procédé peut, alors, également, consister en ce que, lorsque la valeur numérique déterminée Ipv est supérieure à une première valeur seuil de référence Iseuil1 :
- soit on pilote le système dynamique pour lui conférer une deuxième configuration lorsque la valeur numérique déterminée Ipv est supérieure à une deuxième valeur seuil de référence Iseuil2 ;
- soit on pilote le système dynamique pour lui conférer une troisième configuration lorsque la valeur numérique déterminée Ipv est inférieure à la deuxième valeur seuil de référence Iseuil2.

Dans le cas particulier d'un équipement dynamique 1 constitué par un volet roulant, cette deuxième configuration peut être constituée par une position de fermeture partielle (fermeture sur ajours) du tablier de ce volet roulant tandis que cette troisième configuration peut être constituée par une ouverture complète de ce tablier.

Tel que mentionné ci-dessus, le procédé selon l'invention consiste à piloter l'équipement dynamique 1 (plus particulièrement le système dynamique 2) en fonction du courant de court-circuit Icc du générateur photovoltaïque 3.

En fait, l'invention concerne, également, un équipement dynamique 1, notamment conçu pour la mise en oeuvre de ce procédé.

Tel que mentionné ci-dessus, un tel équipement dynamique 1 comporte un système dynamique 2, un générateur photovoltaïque 3, une batterie 4 (alimentée en énergie électrique par le générateur photovoltaïque et alimentant en énergie électrique le système dynamique) et un dispositif 5 pour piloter l'équipement dynamique 1 (plus particulièrement le système dynamique que comporte cet équipement dynamique 2) en fonction de l'ensoleillement.

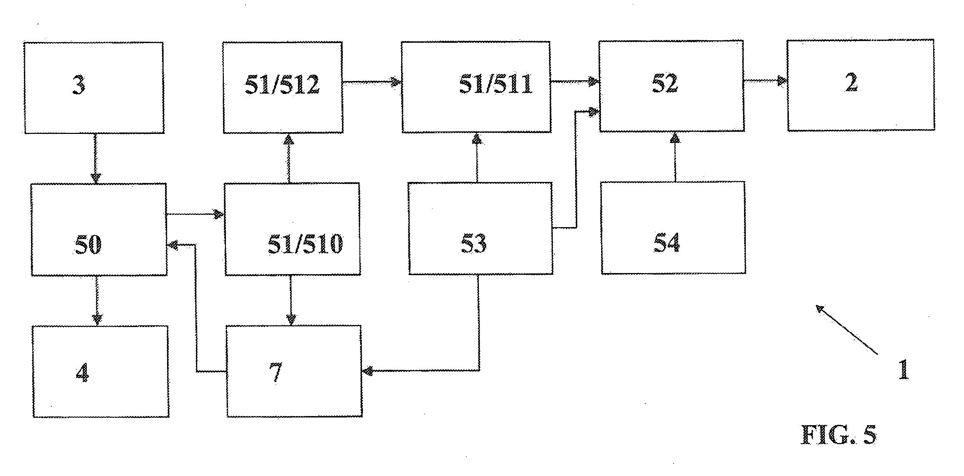

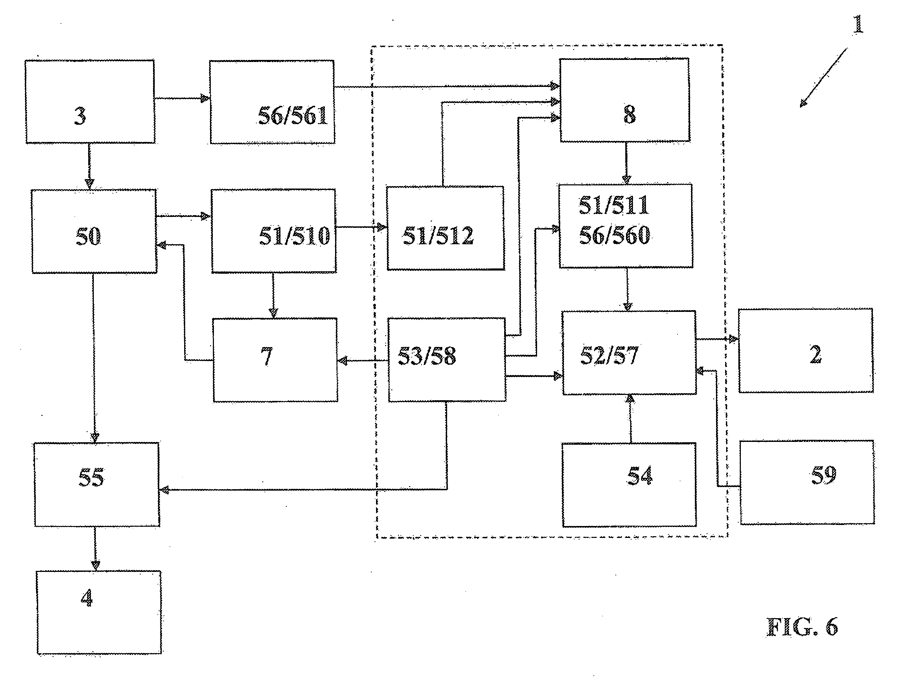

Selon l'invention et tel que visible figures 5 et 6, ce dispositif 5 pour piloter un tel équipement dynamique 1 comporte au moins :
- un moyen 50 pour isoler électriquement (temporairement) le générateur photovoltaïque 3 par rapport à la batterie 4 ;
- un moyen pour relever le courant de court-circuit Icc du générateur photovoltaïque 3 ;
- un moyen 51 pour déterminer une valeur numérique Ipv correspondant à au moins un relevé de courant de court-circuit Icc;
- un moyen 52 pour comparer cette valeur numérique déterminée Ipv à au moins une valeur seuil de référence (Iseuil1 ; Iseuil2);
- un moyen 53 pour commander au moins ledit moyen 50 pour isoler, ledit moyen 51 pour déterminer une valeur numérique Ipv ainsi que ledit moyen 52 pour comparer ;
- un moyen pour piloter le système dynamique 2 en fonction du résultat de la comparaison entre cette valeur numérique déterminée Ipv et au moins une telle valeur seuil de référence (Iseuil1 ; Iseuil2).

En ce qui concerne le moyen 50 pour isoler électriquement la générateur photovoltaïque 3, celui-ci peut, selon un premier mode de réalisation, être au moins en partie constitué par un relais électromécanique, interposé entre le générateur photovoltaïque 3 et la batterie 4, et comportant un contact repos ainsi qu'une bobine, plus particulièrement alimentée par la batterie 4.

Cependant et selon un deuxième mode de réalisation, le moyen 50 pour isoler électriquement le générateur photovoltaïque 3 comporte, d'une part, une diode à très faible courant de fuite interposée entre le générateur photovoltaïque 3 et la batterie 4 et, d'autre part, un transistor de commutation (de type MOSFET de puissance ou analogue) implanté en amont de ladite diode.

Dans un tel mode de réalisation, lorsque le transistor est conducteur, la diode est polarisée en inverse et n'est, donc, plus conductrice. La déconnexion physique de la batterie 4 n'est alors plus nécessaire.

Ce dispositif de pilotage 5 comporte, également, un moyen 51 pour déterminer une valeur numérique Ipv correspondant à au moins un relevé de courant de court-circuit Icc.

Ce moyen 51 pour déterminer une telle valeur numérique Ipv comporte, d'une part, au moins un moyen 510 pour convertir le courant de court-circuit relevé Icc en une tension Vcc et, d'autre part, au moins un moyen 511 pour convertir le signal analogique d'une telle tension Vcc (plus particulièrement la tension Vcc convertie par le moyen 510 pour convertir) en une valeur numérique Ipv correspondant à cette tension Vcc.

Tel que mentionné ci-dessus, le procédé selon l'invention peut, encore, consister à déterminer une valeur numérique Ipv correspondant à une pluralité de relevés de courant de court-circuit Icc.

Dans un pareil cas, ce moyen 51 pour déterminer une telle valeur numérique Ipv comporte, d'une part, au moins un moyen 510 pour convertir chaque courant de court-circuit Icc relevé en une tension Vcc et, d'autre part, au moins un moyen 511 pour convertir le signal analogique d'une telle tension Vcc (notamment la tension Vcc convertie par le moyen 510 pour convertir) en une valeur numérique intermédiaire Ipv' correspondant à cette tension Vcc et, d'autre part encore, un moyen pour calculer la moyenne des valeurs numériques intermédiaires Ipv' pour l'obtention de la valeur numérique Ipv correspondant à la pluralité de relevés de courant de court-circuit Icc.

En ce qui concerne le moyen 510 pour convertir le courant de court-circuit relevé Icc en une tension Vcc, celui-ci peut être constitué par une sonde de courant, plus particulièrement de type à effet Hall.

Cependant et selon un mode de réalisation préféré de l'invention, ce moyen 510 pour convertir est constitué par une résistance de très faible valeur (inférieure ou égale à 1 ohm) permettant que la tension aux bornes de cette résistance soit proportionnelle au courant qui la traverse.

Selon une autre caractéristique, cette résistance présente une puissance qui est calculée en fonction du courant maximum délivré par le générateur photovoltaïque 3 lorsque l'éclairement est maximal (le courant mesuré est directement lié à l'intensité du rayonnement solaire incident).

Selon un mode de réalisation préféré de l'invention, la valeur de la résistance est de 1 ohm ce qui permet d'obtenir un coefficient de conversion simple (1mA ; 1mV) avec peu de chute de tension (330mV pourr 300mA) tout en dissipant une puissance négligeable (90mW pour 300mA).

En ce qui concerne le moyen 511 pour convertir le signal analogique d'une tension Vcc en une valeur numérique Ipv correspondant à cette tension Vcc, celui-ci est constitué par un convertisseur analogique-numérique.

Un tel convertisseur analogique-numérique peut être de type autonome (8, 10, 12 ou 16 bits) ou est (de préférence) constitué par un microcontrôleur que comporte le dispositif de pilotage 5.

Tel que mentionné ci-dessus, le procédé de pilotage consiste à relever un courant de court-circuit Icc et à convertir ce courant de court-circuit Icc en une tension Vcc.

Or, cette tension Vcc peut être assez faible (plus particulièrement quelques mV sous faible éclairement), de sorte qu'il est nécessaire de l'amplifier afin de pouvoir déterminer une valeur numérique Ipv susceptible d'être comparée à une valeur seuil (Iseuill ; Iseuil2).

Pour ce faire, le moyen 51 pour déterminer une valeur numérique Ipv, respectivement une valeur numérique intermédiaire Ipv', comporte, encore, un amplificateur 512 interposé entre le moyen 510 pour convertir un courant de court-circuit Icc relevé en une tension Vcc et le moyen 511 pour convertir le signal analogique d'une telle tension Vcc en une valeur numérique Ipv, respectivement en une valeur numérique intermédiaire Ipv'.

Un tel amplificateur 512 est conçu pour amplifier la tension convertie Vcc qui est faible sous faible éclairement.

En fait, un tel amplificateur 512 peut être constitué, soit par un dispositif à transistor (notamment à émetteur commun), soit par une amplificateur opérationnel (plus particulièrement monté en amplificateur non inverseur).

On observera que cet amplificateur 512 présente un gain qui est calculé de sorte que sa sortie délivre, pour un éclairement maximum du générateur photovoltaïque 3, une tension correspondant à la limite haute de la plage admissible par le convertisseur analogique-numérique 511.

Tel que mentionné ci-dessus, le dispositif de pilotage 5 comporte un moyen 53 pour commander au moins ledit moyen 50 pour isoler, ledit moyen 51 pour déterminer une valeur numérique Ipv (plus particulièrement le moyen 511 pour convertir le signal analogique en une valeur numérique) ainsi que ledit moyen 52 pour comparer.

Un tel moyen 53 pour commander est conçu pour commander, à intervalles déterminés et/ou réguliers, au moins ledit moyen 50 pour isoler, ledit moyen 51 pour déterminer une valeur numérique Ipv ainsi que ledit moyen 52 pour comparer, voire encore ledit moyen pour relever et/ou ledit moyen pour piloter.

A ce propos, on observera que, dans le cas particulier d'un volet roulant, ce moyen 53 pour commander peut être conçu pour assurer une telle commande à intervalles déterminés et réguliers compris entre 2 et 15 minutes, de préférence de l'ordre de 5 minutes.

De manière additionnelle, ce moyen 53 pour commander peut, encore, être conçu pour commander, de manière successive, le moyen 50 pour isoler, le moyen 51 pour déterminer une valeur numérique Ipv et le moyen 52 pour comparer.

Selon un mode de réalisation préféré de l'invention, un tel moyen 53 de commande est constitué par un séquenceur de mesure conçu pour cadencer les opérations nécessaires au pilotage du système dynamique 2 à savoir isoler le générateur photovoltaïque 3, puis déclencher la conversion analogique-numérique, effectuer ensuite la comparaison et finalement reconnecter le générateur photovoltaïque 3.

Selon un caractéristique additionnelle, le dispositif de pilotage 5 comporte, encore, au moins un moyen 54 pour paramétrer au moins une valeur seuil de référence (Iseuil1 ; Iseuil2).

Un tel moyen 54 pour paramétrer peut être constitué, soit par un potentiomètre ajustable ou analogue, soit par une mémoire incorporant au moins une valeur seuil de référence paramétrable (Iseuil1 ; Iseuil2). Une telle mémoire est de type non volatile et peut être interne ou externe.

Selon une autre caractéristique, le dispositif de pilotage 5 comporte un microcontrôleur 6 intégrant au moins une partie du moyen 51 pour déterminer une valeur numérique Ipv correspondant à au moins un relevé de courant de court-circuit Icc (plus particulièrement le convertisseur analogique-numérique 510, voire encore un moyen pour calculer la moyenne des valeurs numériques intermédiaires Ipv') et/ou le moyen 52 pour comparer cette valeur numérique Ipv déterminée à au moins une valeur seuil de référence (Iseuil1 ; Iseuil2), voire encore et selon le cas, le moyen 53 pour commander et/ou la mémoire 54 incorporant au moins une valeur seuil de référence paramétrable (Iseuil1 ; Iseuil2) et/ou l'amplificateur 512.

A ce propos, on observera que le moyen 52 pour comparer que comporte ce microcontrôleur 6 est, plus particulièrement, constitué par une routine logicielle.

On observera qu'un tel microcontrôleur 6 possède des circuits d'horloge (timers) pouvant, avantageusement, être utilisés pour implémenter la fonction de séquenceur de mesure et constituant, au moins en partie, ledit moyen 53 de commande.

Ce moyen 53 de commande peut alors utiliser, avantageusement, au moins un tel circuit d'horloge pour commander, à intervalles déterminés et/ou réguliers, au moins ledit moyen 50 pour isoler, ledit moyen 51 pour déterminer une valeur numérique Ipv ainsi que ledit moyen 52 pour comparer, ceci plus particulièrement de manière successive.

Selon une caractéristique additionnelle, le dispositif de pilotage 5 comporte, encore, un moyen pour relever la température du dispositif 5 pour piloter l'équipement dynamique 1, plus particulièrement le système dynamique 2. En fait, un tel moyen pour relever la température est, plus particulièrement, conçu pour relever la température d'une carte électronique que comporte ce dispositif de pilotage 5.

L'équipement dynamique 1 comporte un générateur photovoltaïque 3 ainsi qu'une batterie 4, alimentée par ce générateur photovoltaïque 3, et alimentant en énergie électrique le système dynamique 2. Tel que mentionné ci-dessus, cet équipement dynamique 1 peut, également, comporter une source de tension externe (par exemple une alimentation secteur ou une batterie de secours) conçue pour alimenter le système dynamique 2 lorsque la quantité d'énergie stockée dans la batterie 4 est insuffisante pour actionner ce système dynamique 2.

Dans un pareil cas, l'équipement dynamique 1 comporte, encore, un moyen 7 pour protéger le moyen 50 pour isoler électriquement le générateur photovoltaïque 3 et/ou une partie au moins du moyen 51 pour déterminer une valeur numérique Ipv correspondant à au moins un relevé de courant de court-circuit Icc (plus particulièrement le convertisseur courant-tension 510), ceci lorsque le courant de court circuit Icc atteint une valeur destructive pour ce moyen 50 pour isoler électriquement le générateur photovoltaïque 3 et/ou pour une partie au moins de ce moyen 51 pour déterminer une valeur numérique Ipv.

En fait, ce moyen 7 pour protéger est, plus particulièrement, conçu pour assurer la protection de ce moyen 50 pour isoler électriquement le générateur photovoltaïque 3 et/ou de cette partie au moins du moyen 51 pour déterminer une valeur numérique Ipv, ceci lorsque le courant de court circuit Icc est supérieur à une valeur de consigne définie.

Selon un mode de réalisation préféré cette valeur de consigne est définie pour être, d'une part, supérieure au courant maximum délivrable par le générateur photovoltaïque 3 et, d'autre part, inférieure au courant destructif du moyen 50 pour isoler électriquement le générateur photovoltaïque 3 et/ou d'une partie au moins du moyen 51 pour déterminer une valeur numérique Ipv.

Selon un mode de réalisation préféré de l'invention, ce moyen 7 pour protéger est constitué par un circuit de protection, interposé entre le moyen 50 pour isoler le générateur photovoltaïque 3 et le moyen 53 pour commander ce moyen 50 pour isoler.

Aussi, lorsque le moyen 50 pour isoler le générateur photovoltaïque 3 est au moins en partie constitué par un relais électromécanique, ce moyen 7 pour protéger (plus particulièrement le circuit de protection) est conçu pour limiter le courant de court circuit Icc (notamment en écrêtant ce courant de court-circuit Icc) et, ensuite, pour interrompre (au moins pendant une durée donnée, notamment quelques minutes) la commande, par le moyen de commande 53, de ce moyen 50 pour isoler le générateur photovoltaïque 3, ceci lorsque le courant de court circuit Icc est supérieur à une valeur de consigne définie.

Cependant, lorsque ce moyen 50 pour isoler comporte une diode à très faible courant de fuite ainsi qu'un transistor de commutation, le moyen 7 pour protéger (plus particulièrement le circuit de protection) est conçu pour limiter la conduction de ce moyen 50 pour isoler (plus particulièrement pour limiter la conduction du transistor que comporte ce moyen 50), ceci lorsque le courant de court circuit Icc est supérieur à une valeur de consigne définie.

En fait, ce circuit de protection (constituant le moyen 7 de protection) peut, alors, comporter une boucle de contre-réaction agissant sur ce transistor de commutation.

Tel que mentionné ci-dessus, le dispositif de pilotage 5 comporte un moyen 53 pour commander au moins ledit moyen pour 50 isoler électriquement, ledit moyen 51 pour déterminer une valeur numérique Vpv ainsi que ledit moyen 52 pour comparer.

Selon une caractéristique additionnelle, ce moyen 53 pour commander peut, encore, être conçu pour commander également le moyen 7 pour protéger le moyen 50 pour isoler électriquement le générateur photovoltaïque 3.

Tel que mentionné ci-dessus, la présente invention consiste à piloter l'équipement dynamique 1 (plus particulièrement au moins le système dynamique 2 que comporte cet équipement dynamique 1) en fonction de l'ensoleillement, ceci sur la base d'au moins un relevé de courant de court-circuit Icc du générateur photovoltaïque 3.

De manière additionnelle, le procédé selon l'invention consiste, encore, à piloter cet équipement dynamique 1 en fonction d'au moins un relevé de tension à vide Vo du générateur photovoltaïque 3. Ce procédé consiste, alors, en ce que :
- on isole électriquement le générateur photovoltaïque 3 par rapport à la batterie 4;
- on relève la tension à vide Vo du générateur photovoltaïque (3);
- à partir de la tension à vide relevée Vo, on détermine une valeur numérique Vpv correspondant à cette tension à vide relevée Vo et on compare cette valeur numérique déterminée Vpv à au moins une valeur seuil de référence (Vseuil1 ; Vseuil2) ;
- lorsque cette valeur numérique déterminée Vpv correspond à une gamme de valeurs limitée par au moins une telle valeur seuil de référence (Vseuil1 ; Vseuil2), on pilote le système dynamique 2 pour lui conférer une configuration correspondant à cette gamme de valeurs.

En fait, ce procédé consiste, plus particulièrement, en ce que, avant de piloter le système dynamique 2 :
- on isole électriquement le générateur photovoltaïque 3 par rapport à la batterie 4;
- on relève la tension à vide Vo du générateur photovoltaïque 3 isolé ;
- à partir de la tension à vide relevée Vo, on détermine une valeur numérique Vpv correspondant à cette tension à vide relevée Vo ;
- et, lorsqu'on pilote le système dynamique 2, on pilote ce système dynamique 2 pour lui conférer une configuration déterminée en fonction d'au moins une des valeurs numériques déterminées Ipv et/ou Ipv et Vpv.

Ce procédé consiste, alors, plus particulièrement, en ce que :
- on isole électriquement le générateur photovoltaïque 3 par rapport à la batterie 4, on relève la tension à vide Vo du générateur photovoltaïque 3, à partir de la tension à vide relevée Vo on détermine une valeur numérique Vpv correspondant à cette tension à vide relevée Vo, et on compare cette valeur numérique déterminée Vpv à au moins une valeur seuil de référence (Vseuil1 ; Vseuil2) ;
- on isole électriquement le générateur photovoltaïque 3 par rapport à la batterie 4, on relève le courant de court-circuit Icc du générateur photovoltaïque 3 isolé, à partir d'au moins un relevé de courant de court-circuit Icc on détermine une valeur numérique Ipv correspondant à ce ou ces relevés de courant de court-circuit Icc, et on compare cette valeur numérique déterminée Ipv à au moins une valeur seuil de référence (Iseuil1 ; Iseuil2);
- lorsque cette valeur numérique déterminée Vpv correspond à une gamme Gv de valeurs limitée par au moins une telle valeur seuil de référence (Vseuil1 ; Vseuil2) et lorsque cette valeur numérique déterminée Ipv correspond à une gamme Gi de valeurs limitée par au moins une telle valeur seuil de référence (Iseuil1 ; Iseuil2), on pilote le système dynamique 2 pour lui conférer une configuration correspondant à ces gammes (Gv ; Gi) de valeurs.

A ce propos, on observera que, selon un mode de réalisation préféré de l'invention, on relève la tension à vide Vo du générateur photovoltaïque 3 (voire on détermine une valeur numérique Vpv correspondant à cette tension à vide relevée Vo, et on compare cette valeur numérique déterminée Vpv à au moins une valeur seuil de référence (Vseuil1 ; Vseuil2)), et on relève le courant de court-circuit Icc du générateur photovoltaïque 3 isolé (voire on détermine une valeur numérique Ipv correspondant à ce ou ces relevés de courant de court-circuit Icc, et on compare cette valeur numérique déterminée Ipv à au moins une valeur seuil de référence (Iseuil1 ; Iseuil2)), ceci de manière séquentielle.

Aussi et selon un mode de réalisation préféré, tout d'abord, on relève la tension à vide Vo du générateur photovoltaïque 3 (voire on détermine une valeur numérique Vpv correspondant à cette tension à vide relevée Vo, et on compare cette valeur numérique déterminée Vpv à au moins une valeur seuil de référence (Vseuil1 ; Vseuil2)), et, ensuite, on relève le courant de court-circuit Icc du générateur photovoltaïque 3 isolé (voire on détermine une valeur numérique Ipv correspondant à ce ou ces relevés de courant de court-circuit Icc, et on compare cette valeur numérique déterminée Ipv à au moins une valeur seuil de référence (Iseuil1 ; Iseuil2)).

De plus et tel que mentionné ci-dessus, on pilote le système dynamique 2 pour lui conférer une configuration correspondant aux gammes (Gv ; Gi) de valeurs.

A ce propos, on observera qu'un tel pilotage est, de préférence, assuré en pilotant le système dynamique 2 pour lui conférer une configuration correspondant à la combinaison de ces deux gammes (Gv ; Gi) de valeurs, l'une Gv correspondant à une gamme Gv de valeurs limitée par au moins une valeur seuil de référence (Vseuil1 ; Vseuil2) tandis que l'autre Gi correspond à une gamme Gi de valeurs limitée par au moins une valeur seuil de référence (Iseuil1 ; Iseuil2).

De plus, on observera que le pilotage d'un tel système dynamique 2 peut être assuré en fonction, d'une part, d'une pluralité de gammes Gv de valeurs limitées, chacune, par au moins une valeur seuil de référence (Vseuill ; Vseuil2) et, d'autre part, d'une pluralité de gammes Gi de valeurs limitées, chacune, par au moins une valeur seuil de référence (Iseuil1 ; Iseuil2).

Le procédé consiste, alors, à définir une configuration particulière du système dynamique 2 pour chaque combinaison de deux de ces gammes (Gv ; Gi) et à piloter, alors, ce système dynamique 2 pour lui conférer une configuration correspondant à une telle combinaison.

Ainsi, le procédé consiste, en particulier, en ce qu'on isole électriquement le générateur photovoltaïque 3 par rapport à la batterie 4.

A ce propos, on observera qu'une telle isolation électrique du générateur photovoltaïque 3 est réalisée de manière temporaire, ceci au moins pendant la durée nécessaire pour permettre la mise en oeuvre du procédé de pilotage susmentionné alors que le reste du temps le générateur photovoltaïque 3 est raccordé à la batterie 4 pour son chargement.

En fait, on isole électriquement le générateur photovoltaïque 3 au moins pendant qu'on relève la tension à vide Vo de ce générateur photovoltaïque 3, voire encore pendant qu'on détermine une valeur numérique Vpv correspondant à cette tension à vide relevée Vo et/ou pendant qu'on compare cette valeur numérique déterminée Vpv à au moins une valeur seuil de référence (Vseuil1 ; Vseuil2).

Selon une autre caractéristique de ce procédé, on isole le générateur photovoltaïque, on relève la tension à vide Vo, on détermine la valeur numérique Vpv correspondant à cette tension à vide relevée Vo et on compare cette valeur numérique déterminée Vpv à au moins une valeur seuil de référence (Vseuil1 ; Vseuil2), ceci à intervalles déterminés et/ou réguliers.

En fait, un tel intervalle est choisi en fonction du besoin de l'application et/ou des composants électroniques intervenant pour la mise en oeuvre du procédé.

Dans le cas particulier d'un équipement dynamique 1 constitué par un volet roulant, cet intervalle est compris entre 30 secondes et 10 minutes, de préférence de l'ordre de 1 minute.

Une caractéristique additionnelle consiste en ce qu'on isole le générateur photovoltaïque, on relève la tension à vide Vo, on détermine la valeur numérique Vpv correspondant à cette tension à vide relevée Vo et on compare cette valeur numérique déterminée Vpv à au moins une valeur seuil de référence (Vseuil1 ; Vseuil2), ceci de manière successive et sous l'impulsion d'une commande de type séquentielle.

Tel que mentionné ci-dessus, le procédé consiste en ce qu'on détermine une valeur numérique Vpv correspondant à une tension à vide relevée Vo.

A ce propos, on observera que, selon un premier mode de réalisation, lorsqu'on détermine une telle valeur numérique Vpv, on convertit directement en valeur numérique une tension correspondant à la tension à vide relevée Vo.

Un autre mode de réalisation consiste en que, lorsqu'on détermine une telle valeur numérique Vpv, on convertit en valeur numérique une tension correspondant à une fraction (division) de cette tension à vide relevée Vo. Pour cela, on divise tout d'abord la tension à vide relevée Vo pour l'obtention d'une fraction de cette tension à vide relevée Vo et on convertit, ensuite, cette fraction de cette tension à vide relevée Vo pour l'obtention de ladite valeur numérique Vpv correspondant à la tension à vide relevée Vo.

Un tel mode de réalisation permet, avantageusement, de ramener la tension à vide relevée Vo dans une plage admissible par un moyen (décrit ci-dessous) pour convertir un signal analogique en signal numérique.

Le procédé consiste, également, en ce qu'on compare la valeur numérique déterminée Vpv à au moins une valeur seuil de référence (Vseuil1 ; Vseuil2).

Selon une caractéristique additionnelle, avant de procéder à une telle comparaison, on paramètre une telle valeur seuil de référence (Vseuil1 ; Vseuil2), voire on enregistre encore une telle valeur seuil de référence (Vseuil1 ; Vseuil2) dans une mémoire, notamment que comporte le dispositif de pilotage 5.

A ce propos, on observera qu'on paramètre une telle valeur seuil de référence (Vseuill ; Vseuil2), là encore, en fonction de valeurs relevées dans la littérature et/ou de valeurs déterminées expérimentalement et/ou de valeurs déterminées par simulation numérique et/ou de valeurs déterminées par calcul, ceci tel que mentionné ci-dessus.

Une autre caractéristique du procédé selon l'invention consiste en ce que, lorsqu'on relève la tension à vide Vo du générateur photovoltaïque 3, on relève également la température du dispositif de pilotage 5 et, soit on pilote le système dynamique 2 lorsque cette température est supérieure à une température seuil Ts, soit on inhibe le pilotage de ce système dynamique 2 lorsque cette température est inférieure à cette température seuil Ts.

Là encore, cette température seuil Ts peut avoir été déterminée, validée et ajustée, comme décrit ci-dessus.

Une caractéristique additionnelle du procédé consiste en ce qu'on inhibe le pilotage du système dynamique 2 à l'intérieur d'au moins une plage horaire prédéfinie.

En fait et de manière plus précise, à l'intérieur de cette plage horaire prédéfinie, on inhibe un tel pilotage en empêchant la comparaison entre la valeur numérique déterminée Vpv et au moins une valeur seuil de référence (Vseuill ; Vseuil2), plus particulièrement en inhibant la fonction comparateur de l'équipement dynamique 1.

A l'intérieur de cette plage horaire, on peut, encore, empêcher le relevé de la tension à vide Vo et/ou la détermination de la valeur numérique Vpv correspondant à cette tension à vide relevée Vo.

A ce propos, on observera que la plage horaire prédéfinie durant laquelle on inhibe le pilotage du système dynamique peut, par exemple, s'étendre entre 22h30 et 7h.

De plus, une telle plage horaire peut être modulée en fonction du jour de la semaine et/ou de la saison et/ou de la localisation géographique et/ou de l'orientation géographique du système dynamique 2 et/ou de l'équipement dynamique 1.

Un tel mode de réalisation permet, avantageusement, d'éviter un pilotage du système dynamique 2 à une heure trop matinale ou trop tardive.

Le procédé décrit ci-dessus permet, en fait, de piloter l'équipement dynamique 1 (plus particulièrement au moins le système dynamique 2) en fonction de l'ensoleillement.

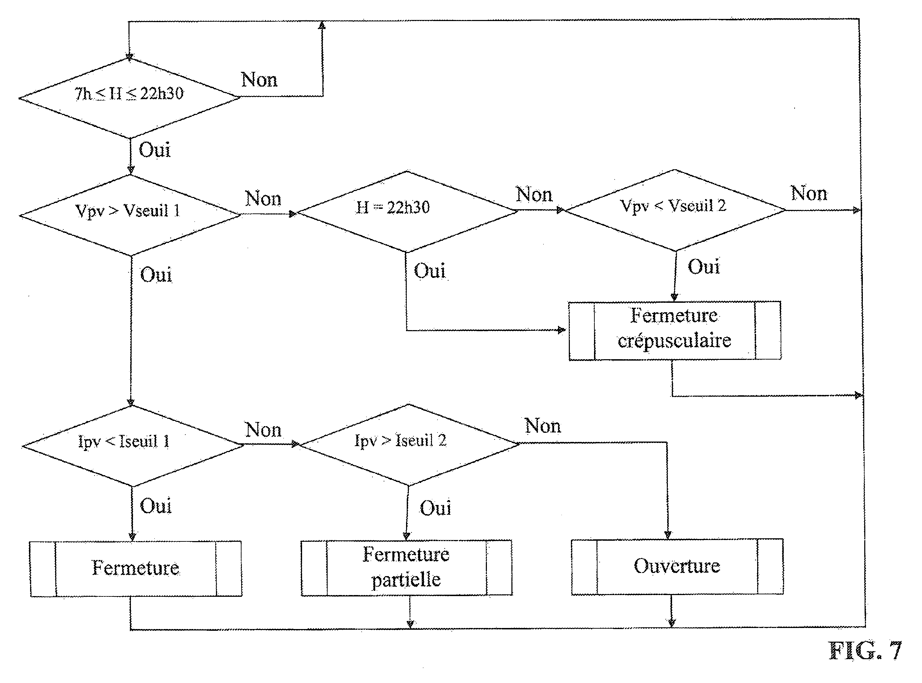

Selon un mode particulier de réalisation, on procède à un tel pilotage conformément au logigramme illustré figure 7.

En particulier, ce procédé consiste en ce qu'on pilote l'équipement dynamique 1 sur la base, d'une part, d'au moins un relevé du courant de court-circuit Icc du générateur photovoltaïque 3 et, d'autre part, d'au moins un relevé de la tension à vide Vo du générateur photovoltaïque 3.

Ce procédé consiste, plus particulièrement, en ce que, avant de piloter l'équipement dynamique 1 sur la base d'au moins un relevé de courant de court-circuit Icc du générateur photovoltaïque 3, il est préalablement procédé au pilotage de cet équipement dynamique sur la base d'au moins un relevé de la tension à vide Vo de ce générateur photovoltaïque 3.

Ainsi, avant de comparer, à au moins une valeur seuil (Iseuil1 ; Iseuil2) de référence, la valeur numérique déterminée Ipv correspondant à au moins un relevé de courant de court-circuit Icc, on compare, à au moins une valeur seuil de référence (Vseuil1 ; Vseuil2), une valeur numérique Vpv déterminée à partir d'au moins un relevé de la tension à vide Vo du générateur photovoltaïque 3 isolé électriquement de la batterie 4 et correspondant à un tel relevé de tension à vide Vo.

Lorsque la valeur numérique déterminée Vpv est supérieure à une première valeur seuil de référence Vseuil1, on compare alors la valeur numérique déterminée Ipv à au moins une valeur seuil de référence (Iseuil1 ; Iseuil2) et on pilote le système dynamique 2 pour lui conférer, selon le cas, au moins une autre configuration.

A ce propos et tel que mentionné ci-dessus, on observera que, lorsque la valeur numérique déterminée Ipv est inférieure à une première valeur seuil de référence Iseuil1, on pilote le système dynamique 2 pour lui conférer une première configuration.

A ce propos, on observera que, lorsque le procédé consiste, encore, à relever la température T du dispositif 5 de pilotage, on pilote ce système dynamique 2 pour lui conférer une deuxième configuration, ceci lorsque la valeur numérique déterminée Ipv est inférieure à une première valeur seuil de référence Iseuil1 et que la température T du dispositif 5 de pilotage est inférieure à une température de seuil Tseuil1.

Dans le cas particulier d'un équipement dynamique 1 constitué par un volet roulant, cette première configuration peut être constituée par une position de fermeture complète du tablier de ce volet roulant.

Cependant, lorsque la valeur numérique déterminée Ipv est supérieure à cette première valeur seuil de référence Iseuil1 :
- soit on pilote le système dynamique pour lui conférer une deuxième configuration lorsque la valeur numérique déterminée Ipv est supérieure à une deuxième valeur seuil de référence Iseuil2 ;
- soit on pilote le système dynamique pour lui conférer une troisième configuration lorsque la valeur numérique déterminée Ipv est inférieure à la deuxième valeur seuil de référence Iseuil2.

A ce propos, on observera que, lorsque le procédé consiste, encore, à relever la température T du dispositif 5 de pilotage, ce procédé consiste, alors et lorsque la valeur numérique déterminée Ipv est supérieure à une première valeur seuil de référence Iseuill, en ce que :
- soit on pilote le système dynamique pour lui conférer une troisième configuration lorsque la valeur numérique déterminée Ipv est supérieure à une deuxième valeur seuil de référence Iseuil2 et que la température T du dispositif 5 de pilotage est supérieure à une température de seuil Tseuil2 ;
- soit on pilote le système dynamique pour lui conférer une quatrième configuration lorsque la valeur numérique déterminée Ipv est inférieure à la deuxième valeur seuil de référence Iseuil2 ou que température T du dispositif 5 de pilotage est inférieure à une température de seuil Tseuil2.

Tel que susmentionné et dans le cas particulier d'un équipement dynamique 1 constitué par un volet roulant, la deuxième configuration correspond à une position de fermeture partielle (fermeture sur ajours) du tablier de ce volet roulant tandis que la troisième configuration peut être constituée par une ouverture complète de ce tablier.

Cependant, lorsque la valeur numérique déterminée Vpv est inférieure à une première valeur seuil de référence Vseuil1, on pilote le système dynamique 2 pour lui conférer une quatrième configuration, ceci lorsque la valeur numérique déterminée Vpv est inférieure à une deuxième valeur seuil de référence Vseuil2 ou lorsque l'heure courante relevée correspond à une heure prédéterminée pour laquelle le système dynamique adopte cette quatrième configuration.

Dans le cas particulier d'un équipement dynamique 1 constitué par un volet roulant, cette quatrième configuration correspond à une position de fermeture crépusculaire du tablier de ce volet roulant.

De manière additionnelle, le procédé de pilotage selon l'invention peut, encore, consister en ce que, avant de comparer la valeur numérique déterminée Vpv à au moins une valeur seuil de référence (Vseuil1 ; Vseuil2), on teste si l'heure courante H est située dans la plage horaire prédéfinie (notamment 22h30 à 7h) pour, soit empêcher une telle comparaison lorsque c'est le cas (et ainsi inhiber le pilotage du système dynamique 2), soit autoriser une telle comparaison lorsque ce n'est pas la cas (et, ainsi, autoriser le pilotage du système dynamique 2).

En fait, l'invention concerne, également, un équipement dynamique 1 comportant, d'une part, des moyens (50 à 54) décrits ci-dessus, notamment conçus pour la mise en oeuvre du procédé susmentionné basé sur des relevés de courant de court-circuit Icc du générateur photovoltaïque 3 et, d'autre part, des moyens additionnels, décrits ci-dessous, et notamment conçus pour la mise en oeuvre des étapes additionnelles du procédé de pilotage basées sur des relevés tension à vide Vo.

Selon l'invention et tel que visible figure 6, cet équipement dynamique 1 comporte ledit dispositif 5 pour piloter cet équipement dynamique 1 lequel 5 comporte alors encore :
- un autre moyen 55 pour isoler électriquement (temporairement) le générateur photovoltaïque par rapport à la batterie ;
- un moyen pour relever la tension à vide Vo du générateur photovoltaïque 3 ;
- un moyen 56 pour déterminer une valeur numérique Vpv correspondant à cette tension à vide relevée Vo ;
- un moyen 57 pour comparer cette valeur numérique déterminée Vpv à au moins une valeur seuil de référence (Vseuil1 ; Vseuil2);
- un moyen 58 pour commander au moins le moyen 55 pour isoler électriquement, le moyen 56 pour déterminer une valeur numérique Vpv ainsi que le moyen 57 pour comparer ;
- un moyen pour piloter le système dynamique en fonction du résultat de la comparaison entre cette valeur numérique déterminée Vpv et au moins une telle valeur seuil de référence (Vseuil1 ; Vseuil2).

En ce qui concerne le moyen 55 pour isoler électriquement la générateur photovoltaïque 3, celui-ci peut, selon un premier mode de réalisation, être au moins en partie constitué par un relais électromécanique, interposé entre le générateur photovoltaïque 3 et la batterie 4, et comportant un contact repos ainsi qu'une bobine, plus particulièrement alimentée par la batterie 4.

Cependant et selon un deuxième mode de réalisation, le moyen 55 pour isoler électriquement le générateur photovoltaïque 3 est au moins en partie constitué par une diode à très faible courant de fuite interposée entre le générateur photovoltaïque 3 et la batterie 4.

Dans un pareil cas, ladite diode présente une tension de seuil déterminée de sorte que le moyen 55 pour isoler électriquement le générateur photovoltaïque 3 assure une isolation de celui-ci 3 tant que la tension aux bornes de ce générateur photovoltaïque 3 est inférieure à la tension de la batterie 4 augmentée de la tension de seuil de la diode.

Ainsi, tant que la tension aux bornes du générateur photovoltaïque 3 est inférieure à celle de la batterie 4 augmentée de la tension de seuil de la diode, le générateur photovoltaïque 3 se comporte comme si il était à vide. Ce mode de réalisation permet, de manière avantageuse, d'éviter une déconnexion physique du générateur photovoltaïque 3.

Tel que mentionné ci-dessus, le dispositif de pilotage 5 comporte un moyen 56 pour déterminer une valeur numérique Vpv correspondant à la tension à vide Vo relevée.

Ce moyen 56 pour déterminer une telle valeur numérique Vpv comporte au moins un moyen 560 pour convertir un signal analogique, correspondant à la tension à vide Vo relevée, en un signal numérique correspondant à cette tension à vide Vo relevée.

En fait, un tel moyen 560 pour convertir un tel signal est, plus particulièrement, constitué par un convertisseur analogique-numérique, notamment de type autonome 8 bits (ou plus).

De manière additionnelle, le moyen 56 pour déterminer une valeur numérique Vpv comporte, encore, un diviseur de tension 561, interposé entre le générateur photovoltaïque 3 et le moyen 560 pour convertir un signal analogique en un signal numérique.

Un tel diviseur de tension 561 est conçu pour diviser la tension à vide Vo relevée du générateur photovoltaïque 3, ceci pour l'obtention d'une tension Vo', correspondant à la tension à vide Vo du générateur photovoltaïque, et dont la valeur est comprise dans une gamme de valeurs admissible pour le moyen 560 pour convertir un signal analogique en un signal numérique.

Selon un mode de réalisation particulier de l'invention, ce diviseur de tension 561 est constitué par un pont de résistances dont le rapport est égal à la tension d'entrée maximale du moyen 560 pour convertir divisée par la tension à vide du générateur photovoltaïque 3 maximale.

De manière additionnelle, ce diviseur de tension 561 est conçu pour que le courant de polarisation du pont de résistance ne dépasse pas quelques dizaines de micro-ampères en sorte que la charge qu'il amène en sortie du générateur photovoltaïque 3 puisse être considérée comme négligeable.

Tel que mentionné ci-dessus, le dispositif de pilotage 5 comporte un moyen 58 pour commander au moins le moyen 55 pour isoler électriquement, le moyen pour 56 déterminer une valeur numérique Vpv ainsi que le moyen 57 pour comparer.

En fait, ce moyen 58 pour commander est conçu pour commander, à intervalles déterminés et/ou réguliers, le moyen 55 pour isoler électriquement, le moyen 56 pour déterminer une valeur numérique Vpv et le moyen 57 pour comparer, voire encore le moyen pour relever et/ou le moyen pour piloter.

A ce propos, on observera que, dans le cas particulier d'un volet roulant, ce moyen 58 pour commander peut être conçu pour assurer une telle commande à intervalles déterminés et réguliers compris entre 30 secondes et 10 minutes, de préférence de l'ordre de 1 minute.

De manière additionnelle, ce moyen 58 de commande peut, encore, être conçu pour commander, de manière successive, le moyen 55 pour isoler électriquement, le moyen 56 pour déterminer une valeur numérique et le moyen 57 pour comparer.

Selon un mode de réalisation préféré de l'invention, un tel moyen 58 de commande est constitué par un séquenceur de mesure conçu pour cadencer les opérations nécessaires au pilotage du système dynamique 2 à savoir isoler le générateur photovoltaïque 3, puis déclencher la conversion analogique-numérique, effectuer ensuite la comparaison et finalement reconnecter le générateur photovoltaïque 3.

Selon un caractéristique additionnelle, le dispositif de pilotage 5 comporte, encore, au moins un moyen pour paramétrer au moins une valeur seuil de référence (Vseuil1 ; Vseuil2).

Un tel moyen pour paramétrer peut être constitué, soit par un potentiomètre ajustable ou analogue, soit par une mémoire incorporant au moins une valeur seuil de référence paramétrable (Vseuil1 ; Vseuil2). Une telle mémoire est de type non volatile et peut être interne ou externe.

Selon une autre caractéristique, le dispositif de pilotage 5 comporte, également, un moyen 59 pour inhiber le pilotage du système dynamique 2 à l'intérieur d'au moins une plage horaire prédéfinie.

En fait, ce moyen 59 pour inhiber le pilotage du système dynamique 2 est, de préférence, conçu pour empêcher la comparaison entre la valeur numérique déterminée Vpv et au moins une valeur seuil de référence (Vseuil1 ; Vseuil2), plus particulièrement en inhibant le moyen 57 pour comparer que comporte le dispositif de pilotage 5.

De manière additionnelle, ce moyen 59 pour inhiber le pilotage peut, encore, être conçu pour inhiber le moyen pour relever la tension à vide Vo et/ou le moyen 56 pour déterminer une valeur numérique Vpv.

A ce propos, on observera que la plage horaire prédéfinie durant laquelle on inhibe le pilotage du système dynamique 2 peut, par exemple, s'étendre entre 22h30 et 7h.

De plus, une telle plage horaire peut être modulée en fonction du jour de la semaine et/ou de la saison et/ou de la localisation géographique et/ou de l'orientation géographique du système dynamique 2 et/ou de l'équipement dynamique 1.

Un tel mode de réalisation permet, avantageusement, d'éviter un pilotage du système dynamique 2 à une heure trop matinale ou trop tardive.

Selon un mode de réalisation préféré de l'invention, le moyen 59 pour inhiber est au moins en partie constitué par une horloge temps réel avec calendrier.

Le dispositif de pilotage 5 comporte, également, un moyen 8 pour sélectionner, soit une partie au moins du moyen 51 pour déterminer une valeur numérique Ipv (plus particulièrement le convertisseur courant-tension 510, voire l'amplificateur 512) correspondant à au moins un relevé de courant de court-circuit Icc, soit une partie au moins du moyen 56 pour déterminer une valeur numérique Vpv (plus particulièrement le diviseur de tension 561) correspondant à une tension à vide Vo relevée.

Ce moyen 8 pour sélectionner est interposé entre le générateur photovoltaïque 3 et un moyen (511 ; 560) pour convertir un signal analogique en un signal numérique.

La présence de ce moyen de sélection 8 permet, avantageusement, au dispositif de pilotage 5 de comporter un unique moyen (511 ; 560) pour convertir un signal analogique en un signal numérique auquel est transmis un signal analogique correspondant, selon le cas, à un courant de court-circuit Icc ou à une tension à vide Vo, ceci sous l'impulsion de ce moyen de sélection 8.

Un mode particulier de réalisation consiste en ce que ce moyen pour sélectionner 8 est constitué par un multiplexeur analogique, un sélecteur de canal ou analogue.

Tel que mentionné ci-dessus, le dispositif de pilotage 5 comporte un moyen (53 ; 58) pour commander au moins ledit moyen (50 ; 55) pour isoler électriquement, ledit moyen (51 ; 56) pour déterminer une valeur numérique Vpv ainsi que ledit moyen (52 ; 57) pour comparer.

Selon une caractéristique additionnelle, ce moyen (53 ; 58) pour commander peut, encore, être conçu pour commander également le moyen 8 pour sélectionner, voire encore le moyen 7 pour protéger le moyen (50 ; 55) pour isoler électriquement le générateur photovoltaïque 3.

Un tel moyen pour commander (53 ; 58) est, de préférence, constitué par un séquenceur de mesure.

Une autre caractéristique du dispositif de pilotage 5 consiste en ce qu'il comporte un unique convertisseur analogique-numérique (511 ; 560) constituant, avantageusement, d'une part, une partie au moins du moyen 51 pour déterminer une valeur numérique Ipv correspondant à au moins un relevé de courant de court-circuit Icc et, d'autre part, une partie au moins du moyen 56 pour déterminer une valeur numérique Vpv correspondant à une tension à vide Vo relevée.

Encore une autre caractéristique consiste en ce que ce dispositif de pilotage 5 comporte un unique comparateur constituant, avantageusement, d'une part, le moyen 52 pour comparer, à au moins une valeur seuil de référence (Iseuil1 ; Iseuil2), une valeur numérique déterminée Ipv correspondant à au moins un relevé de courant de court-circuit Icc et, d'autre part, le moyen 57 pour comparer, à au moins une valeur seuil de référence (Vseuil1 ; Vseuil2), une valeur numérique déterminée Vpv correspondant à la tension à vide Vo relevée.

De manière additionnelle, le dispositif de pilotage 5 comporte un unique séquenceur de mesure constituant, avantageusement, les moyens (53 ; 58) pour commander au moins :
- les moyens (50 ; 55) pour isoler électriquement le générateur photovoltaïque 3 par rapport à la batterie 4 ;
- le moyen 8 pour sélectionner soit une partie au moins du moyen 51 pour déterminer une valeur numérique Ipv correspondant à au moins un relevé de courant de court-circuit Icc, soit une partie au moins du moyen 56 pour déterminer une valeur numérique Vpv correspondant à une tension à vide Vo relevée ;
- le moyen 51 pour déterminer une valeur numérique Ipv correspondant à au moins un relevé de courant de court-circuit Icc;
- le moyen 52 pour comparer cette valeur numérique déterminée Ipv à au moins une valeur seuil de référence (Iseuil1 ; Iseuil2) ;
- le moyen 56 pour déterminer une valeur numérique Vpv correspondant à une tension à vide Vo relevée ;
- le moyen 57 pour comparer cette valeur numérique déterminée Vpv à au moins une valeur seuil de référence (Vseuil1 ; Vseuil2).

De manière additionnelle, un tel séquenceur de mesure constitue, encore, les moyens 53 pour commander le moyen 7 pour protéger le moyen 50 pour isoler électriquement le générateur photovoltaïque 3.

Finalement, le dispositif de pilotage 5 comporte un microcontrôleur 6 intégrant au moins le moyen 8 pour sélectionner, le convertisseur analogique-numérique (511 ; 560), le comparateur (52 ; 57) ainsi que le séquenceur de mesure (53 ; 58).

De manière additionnelle, ce microcontrôleur 6 intègre, encore, au moins un moyen 54 pour paramétrer au moins une valeur seuil de référence (Iseuil1, Iseuil2; Vseuil1, Vseuil2), plus particulièrement constitué par une mémoire incorporant au moins une valeur seuil de référence paramétrable (Iseuil1, Iseuil2; Vseuil1, Vseuil2).

## Revendications

1. Procédé pour le pilotage, en fonction de l'ensoleillement, d'un système dynamique (2) que comporte un équipement dynamique (1) lequel comporte encore au moins un générateur photovoltaïque (3), au moins une batterie (4) pour le stockage de l'énergie électrique fournie par le générateur photovoltaïque (3) et pour l'alimentation en énergie électrique d'un système dynamique (2) et au moins un dispositif (5) pour le pilotage de cet équipement dynamique (5), ce procédé consiste en ce que :
- on isole électriquement le générateur photovoltaïque (3) par rapport à la batterie (4);
- on relève le courant de court-circuit (Icc) du générateur photovoltaïque (3) isolé ;
- à partir d'au moins un relevé de courant de court-circuit (Icc), on détermine une valeur numérique (Ipv) correspondant à ce ou ces relevés de courant de court-circuit (Icc) et on compare cette valeur numérique déterminée (Ipv) à au moins une valeur seuil de référence (Iseuil1 ; Iseuil2);
- lorsque cette valeur numérique déterminée (Ipv) correspond à une gamme de valeurs limitée par au moins une telle valeur seuil de référence (Iseuil1 ; Iseuil2), on pilote le système dynamique (2) pour lui conférer une configuration correspondant à cette gamme de valeurs.

2. Procédé de pilotage selon la revendication 1, **caractérisé par le fait que** :
- on procède, de manière espacée dans le temps, à plusieurs relevés de courant de court-circuit (Icc) aux bornes du générateur photovoltaïque (3) isolé ;
- pour chaque relevé de courant de court-circuit (Icc) on détermine une valeur numérique intermédiaire (Ipv') correspondant à un tel relevé de courant de court-circuit (Icc);
- on détermine une valeur numérique (Ipv) en calculant la moyenne des valeurs numériques intermédiaires (Ipv') correspondant à une pluralité de ces relevés de courant de court-circuit (Icc);
- on compare cette valeur numérique déterminée (Ipv) à au moins une valeur seuil de référence (Iseuil1 ; Iseuil2);
- on pilote le système dynamique (2) en fonction du résultat de cette comparaison.

3. Procédé de pilotage selon l'une quelconque des revendications précédentes, **caractérisé par le fait que**, lorsqu'on détermine une valeur numérique (Ipv), respectivement une valeur numérique intermédiaire (Ipv'), correspondant à un relevé de courant de court-circuit (Icc), on convertit tout d'abord le courant de court-circuit (Icc) relevé en une tension (Vcc) et on convertit, ensuite et en une valeur numérique (Ipv), respectivement en une valeur numérique intermédiaire (Ipv'), correspondant à cette tension (Vcc) et à ce courant de court-circuit relevé (Icc), cette tension (Vcc) ou une amplification de cette tension (Vcc).

4. Procédé de pilotage selon l'une quelconque des revendications précédentes, **caractérisé par le fait que**, avant de comparer la valeur numérique déterminée (Ipv) à au moins une valeur seuil de référence (Iseuil1 ; Iseuil2), on paramètre une telle valeur seuil de référence (Iseuil1 ; Iseuil2), soit en réglant un potentiomètre ajustable, soit en enregistrant une valeur seuil de référence (Iseuil1 ; Iseuil2) dans une mémoire.

5. Procédé de pilotage selon l'une quelconque des revendications précédentes, **caractérisé par le fait que**, lorsqu'on relève le courant de court-circuit (Icc) du générateur photovoltaïque (3) isolé, on relève également la température du dispositif de pilotage (5) et, soit on autorise le pilotage du système dynamique (2) lorsque cette température est supérieure à une température seuil (Ts), soit on inhibe le pilotage de ce système dynamique (2) lorsque cette température est inférieure à cette température seuil (Ts).

6. Procédé de pilotage selon l'une quelconque des revendications précédentes, **caractérisé par le fait que**, avant d'isoler électriquement le générateur photovoltaïque (3), on assure la protection du moyen (56) pour isoler électriquement le générateur photovoltaïque (3) et/ou d'une partie au moins du moyen (57) pour déterminer une valeur numérique (Ipv) correspondant à au moins un relevé de courant de court circuit (Icc), ceci lorsque le courant de court circuit (Icc) est supérieur à une valeur de consigne définie.

7. Procédé de pilotage selon l'une quelconque des revendications précédentes, **caractérisé par le fait que**, lorsque la valeur numérique déterminée (Ipv) est inférieure à une première valeur seuil de référence (Iseuil1), on pilote le système dynamique (2) pour lui conférer une première configuration.

8. Procédé de pilotage selon l'une quelconque des revendications précédentes, **caractérisé par le fait que**, lorsque la valeur numérique déterminée (Ipv) est supérieure à une première valeur seuil de référence (Iseuil1):
- soit on pilote le système dynamique (2) pour lui conférer une deuxième configuration lorsque la valeur numérique déterminée (Ipv) est supérieure à une deuxième valeur seuil de référence (Iseuil2) ;
- soit on pilote le système dynamique (2) pour lui conférer une troisième configuration lorsque la valeur numérique déterminée (Ipv) est inférieure à la deuxième valeur seuil de référence (Iseuil2).

9. Equipement dynamique (1), notamment pour la mise en oeuvre du procédé selon l'une quelconque des revendications précédentes, comportant un système dynamique (2), un générateur photovoltaïque (3), une batterie (4) alimentée en énergie électrique par le générateur photovoltaïque (3) et alimentant en énergie électrique le système dynamique (2), et au moins un dispositif (5) pour piloter cet équipement dynamique (1) en fonction de l'ensoleillement, **caractérisé par le fait que** le dispositif (5) pour piloter l'équipement dynamique (1) comporte au moins :
- un moyen (50) pour isoler électriquement le générateur photovoltaïque (3) par rapport à la batterie (3);
- un moyen pour relever le courant de court-circuit (Icc) du générateur photovoltaïque (3);
- un moyen (51) pour déterminer une valeur numérique (Ipv) correspondant à au moins un relevé de courant de court-circuit (Icc);
- un moyen (52) pour comparer cette valeur numérique déterminée (Ipv) à au moins une valeur seuil de référence (Iseuil1 ; Iseuil2);
- un moyen (53) pour commander au moins ledit moyen (50) pour isoler, ledit moyen (51) pour déterminer une valeur numérique (Ipv) ainsi que ledit moyen (52) pour comparer ;
- un moyen pour piloter le système dynamique (2) en fonction du résultat de la comparaison entre cette valeur numérique déterminée (Ipv) et au moins une telle valeur seuil de référence (Iseuil1 ; Iseuil2).

10. Equipement dynamique (1) selon la revendication 9, **caractérisé par le fait que** le moyen (50) pour isoler électriquement le générateur photovoltaïque (3) est au moins en partie constitué par un relais électromécanique, interposé entre le générateur photovoltaïque (3) et la batterie (4), et comportant un contact repos ainsi qu'une bobine alimentée par la batterie (4).

11. Equipement dynamique (1) selon la revendication 9, **caractérisé par le fait que** le moyen (50) pour isoler électriquement le générateur photovoltaïque (3) comporte, d'une part, une diode à très faible courant de fuite interposée entre le générateur photovoltaïque (3) et la batterie (4) et, d'autre part, un transistor de commutation implanté en amont de ladite diode.

12. Equipement dynamique (1) selon l'une quelconque des revendications 9 à 11, **caractérisé par le fait que** le moyen (51) pour déterminer une valeur numérique (Ipv) correspondant à un relevé de courant de court-circuit (Icc) comporte, d'une part, au moins un moyen (510) pour convertir le courant de court-circuit (Icc) relevé en une tension (Vcc) et, d'autre part, au moins un moyen (511) pour convertir le signal analogique d'une telle tension (Vcc) en une valeur numérique (Ipv) correspondant à cette tension (Vcc).

13. Equipement dynamique (1) selon l'une quelconque des revendications 9 à 12, **caractérisé par le fait que** le moyen (51) pour déterminer une valeur numérique (Ipv) correspondant à une pluralité de relevés de courant de court-circuit (Icc) comporte, d'une part, au moins un moyen (510) pour convertir chaque courant de court-circuit relevé (Icc) en une tension (Vcc), d'autre part, au moins un moyen (511) pour convertir le signal analogique d'une telle tension (Vcc) en une valeur numérique intermédiaire (Ipv') correspondant à cette tension (Vcc) et, d'autre part encore, un moyen pour calculer la moyenne des valeurs numériques intermédiaires (Ipv') pour l'obtention de la valeur numérique (Ipv) correspondant à la pluralité de relevés de courant de court-circuit (Icc).

14. Equipement dynamique (1) selon l'une quelconque des revendications 9 à 13, **caractérisé par le fait qu'**il comporte au moins un moyen (54) conçu pour paramétrer au moins une valeur seuil de référence (Iseuil1 ; Iseuil2) et constitué, soit par un potentiomètre ajustable ou analogue, soit par une mémoire incorporant au moins une valeur seuil de référence paramétrable (Iseuil1 ; Iseuil2).

15. Equipement dynamique (1) selon l'une quelconque des revendications 9 à 14, **caractérisé par le fait qu'**il comporte un microcontrôleur (6) intégrant au moins une partie du moyen (51) pour déterminer une valeur numérique (Ipv) correspondant à au moins un relevé de courant de court-circuit (Icc) et/ou le moyen (52) pour comparer cette valeur numérique déterminée (Ipv) à au moins une valeur seuil de référence (Iseuil1 ; Iseuil2), voire et selon le cas, le moyen pour commander (53) et/ou la mémoire incorporant au moins une valeur seuil de référence paramétrable (Iseuil1 ; Iseuil2) et/ou l'amplificateur (512).

16. Equipement dynamique (1) selon l'une quelconque des revendications 9 à 15, **caractérisé par le fait qu'**il comporte un moyen (7) pour protéger le moyen (50) pour isoler électriquement le générateur photovoltaïque (3) et/ou le moyen (51) pour déterminer une valeur numérique (Ipv), ceci lorsque le courant de court circuit (Icc) est supérieur à une valeur de consigne définie.

## Patentansprüche

1. Verfahren zum Steuern, in Abhängigkeit von der Sonnenstrahlung, eines dynamischen Systems (2), welches eine dynamische Ausrüstung (1) umfasst, die auch mindestens einen Photovoltaik-Generator (3), mindestens eine Batterie (4) zum Speichern der von dem Photovoltaik-Generator (3) gelieferten elektrischen Energie und zum Zuführen von elektrischer Energie zu einem dynamischen System (2) und mindestens eine Vorrichtung (5) zum Steuern dieser dynamischen Ausrüstung (5) umfasst, wobei dieses Verfahren darin besteht, dass:
- der Photovoltaik-Generator (3) elektrisch von der Batterie (4) isoliert wird;
- der Kurzschlussstrom (Icc) des isolierten Photovoltaik-Generators (3) aufgenommen wird;
- ab mindestens einer Aufnahme des Kurzschlussstroms (Icc) ein numerischer Wert (Ipv'), der dieser Aufnahme bzw. Aufnahmen des Kurzschlussstroms (Icc) entspricht, bestimmt wird und dieser bestimmte numerische Wert (Ipv) mit mindestens einem Bezugschwellenwert (Iseuil1; Iseuil2) verglichen wird;
- wenn dieser bestimmte numerische Wert (Ipv) einem durch zumindest einen solchen Bezugschwellenwert (Iseuil1; Iseuil2) begrenzten Bereich von Werten entspricht, das dynamische System (2) gesteuert wird, um ihm eine Konfiguration zu verleihen, die diesem Bereich von Werten entspricht.

2. Verfahren zum Steuern nach Anspruch 1, **dadurch gekennzeichnet, dass**:
- mehrere Aufnahmen des Kurzschlussstroms (Icc) zeitlich beabstandet an den Anschlussklemmen des isolierten Photovoltaik-Generators (3) vorgenommen werden;
- für jede Aufnahme des Kurzschlussstroms (Icc) ein numerischer Zwischenwert (Ipv'), der einer solchen Aufnahme des Kurzschlussstroms (Icc) entspricht, bestimmt wird;
- eine numerischer Wert (Ipv) durch Mittelung der numerischen Zwischenwerte (Ipv'), die einer Mehrzahl dieser Aufnahmen des Kurzschlussstroms (Icc) entsprechen, bestimmt wird;
- dieser bestimmte numerische Wert (Ipv) mit zumindest einem Bezugschwellenwert (Iseuil1; Iseuil2) verglichen wird;
- das dynamische System (2) abhängig von dem Ergebnis dieses Vergleichs gesteuert wird.

3. Verfahren zum Steuern nach irgendeinem der vorgehenden Ansprüche, **dadurch gekennzeichnet, dass** wenn ein numerischer Wert (IPV), bzw. ein numerischer Zwischenwert (Ipv'), der einer Aufnahme des Kurzdchlussstroms (Icc) entspricht, bestimmt wird, zunächst der aufgenommene Kurzschlussstrom (Icc) in eine Spannung (Vcc) umgewandelt, und anschliessend in einen numerischen Wert (Ipv), bzw. einen numerischen Zwischenwert (Ipv') umgewandelt wird, der dieser Spannung (Vcc) und diesem aufgenommenen Kurzschlussstrom (Icc), dieser Spannung (Vcc) oder einer Verstärkung dieser Spannung (Vcc) entspricht.

4. Verfahren zum Steuern nach irgendeinem der vorgehenden Ansprüche, **dadurch gekennzeichnet, dass** bevor der bestimmte numerische Wert (Ipv) mit zumindest einem Bezugschwellenwert (Iseuill; Iseuil2) verglichen wird, ein solcher Bezugsschwellwert (Iseuill; Iseuil2) parametrisiert wird, entweder durch Einstellen eines Potentiometers oder durch Speichern eines Bezugschwellenwerts (Iseuil1; Iseuil2) in einen Speicher.

5. Verfahren zum Steuern nach irgendeinem der vorgehenden Ansprüche, **dadurch gekennzeichnet, dass**, wenn der Kurzschlussstrom (Icc) des isolierten Photovoltaik-Generators (3) augenommen wird, auch die Temperatur der Steuervorrichtung (5) aufgenommen wird und entweder die Steuerung des dynamischen Systems (2) erlaubt wird, wenn diese Temperatur höher als ein Schwellentemperatur (Ts) ist, oder die Steuerung dieses dynamischen Systems (2) verhindert wird, wenn diese Temperatur niedriger als diese Schwellentemperatur (Ts) ist.

6. Verfahren zum Steuern nach irgendeinem der vorgehenden Ansprüche, **dadurch gekennzeichnet, dass** bevor der Photovoltaik-Generator (3) elektrisch isoliert wird, der Schutz des Mittels (56) zur elektrischen Isolierung des Photovoltaikgenerators (3) und/oder mindestens ein Teil des Mittels (57) zur Bestimmung eines numerischen Wertes (Ipv), der wenigstens einer Aufnahme des Kurzschlußstroms (Icc) entspricht, gesichert wird, und zwar wenn dieser Kurzschlussstrom (Icc) größer ist als ein definierter Sollwert.

7. Verfahren zum Steuern nach irgendeinem der vorgehenden Ansprüche, **dadurch gekennzeichnet, dass**, wenn der bestimmte numerische Wert (Ipv) kleiner ist als ein erster Bezugschwellenwert (Iseuil1), das dynamische System (2) gesteuert wird, um ihm eine erste Konfiguration zu verleihen.

8. Verfahren zum Steuern nach irgendeinem der vorgehenden Ansprüche, **dadurch gekennzeichnet, dass**, wenn der bestimmte numerische Wert (Ipv) größer ist als ein erster Bezugschwellenwert (Iseuill):
- entweder das dynamische System (2) gesteuert wird, um ihm eine zweite Konfiguration zu verleihen, wenn der bestimmte numerische Wert (IpV) größer ist als ein zweiter Bezugschwellenwert (Iseuil2);
- oder das dynamische System (2) gesteuert wird, um ihm eine dritte Konfiguration zu verleihen, wenn der bestimmte numerische Wert (Ipv) kleiner ist als der zweite Bezugschwellenwert (Iseuil2).

9. Dynamische Ausrüstung (1), nämlich zur Durchführung des Verfahrens nach irgendeinem der vorgehenden Ansprüche, umfassend ein dynamisches System (2), einen Photovoltaik-Generator (3), eine von dem Photovoltaik-Generator (3) mit elektrischer Energie versorgte Batterie (4), die das dynamische System (2) mit elektrischer Energie versorgt, und mindestens eine Vorrichtung (5), um diese dynamische Ausrüstung (1) abhängig von der Sonnenstrahlung zu steuern, **dadurch gekennzeichnet, dass** die Vorrichtung (5) zur Steuerung der dynamischen Ausrüstung (1) mindestens Folgendes umfasst:
- ein Mittel (50), um den Photovoltaik-Generator (3) bezüglich der Batterie (3) elektrisch zu isolieren;
- ein Mittel, um den Kurzschlussstrom (Icc) des Photovoltaik-Generators (3) aufzuhmen;
- ein Mittel (51), um einen numerischen Wert (Ipv) zu bestimmen, der mindestens einer Aufnahme des Kurzschlussstroms (Icc) entspricht;
- ein Mittel (52), um diesen bestimmten numerischen Wert (Ipv) mit mindestens einem Bezugschwellenwert (Iseuil1; Iseuil2) zu vergleichen;
- ein Mittel (53), um zumindest das besagte Mittel (50) zum Isolieren, das besagte Mittel (51) zum Bestimmen eines numerischen Werts (Ipv) sowie das besagte Mittel (52) zum Vergleichen zu steuern;
- ein Mittel, um das dynamische System (2) abhängig von dem Ergebnis des Vergleichs zwischen diesem bestimmten numerischen Wert (Ipv) und zumindest einem solchen Bezugschwellenwert (Iseuil1; Iseuil2) zu steuern.

10. Dynamische Ausrüstung (1) nach Anspruch 9, **dadurch gekennzeichnet, dass** das Mittel (50), um den Photovoltaik-Generator (3) elektrisch zu isolieren zumindest teilweise aus einem elektromechanischen Relais besteht, das zwischen dem Photovoltaik-Generator (3) und der Batterie (4) angeordnet ist und einen Ruhekontakt sowie eine von der Batterie (4) mit Strom versorgte Spule umfasst.

11. Dynamische Ausrüstung (1) nach Anspruch 9, **dadurch gekennzeichnet, dass** das Mittel (50), um den Photovoltaik-Generator (3) elektrisch zu isolieren zum einen eine Diode mit sehr niedrigem Leckstrom, die zwischen dem Photovoltaik-Generator (3) und der Batterie (4) angeordnet ist, und zum anderen einen Schalttransistor, der stromaufwärts von der besagten Diode angebracht ist, umfasst.

12. Dynamische Ausrüstung (1) nach irgendeinem der Ansprüche 9 bis 11, **dadurch gekennzeichnet, dass** das Mittel (51) zum Bestimmen eines numerischen Wertes (Ipv), der einer Aufnahme des Kurzschlussstroms (Icc) entspricht, zum einem mindestens ein Mittel (510) zum Umwandeln des aufgenommenen Kurzschlussstroms (Icc) in eine Spannung (Vcc) und zum anderen mindestens ein Mittel (511) zum Umwandeln des analogen Signals einer solchen Spannung (Vcc) in einen numerischen Wert (Ipv), der dieser Spannung (Vcc) entspricht, umfasst.

13. Dynamische Ausrüstung (1) nach irghendeinem der Ansprüche 9 bis 12, **dadurch gekennzeichnet, dass** das Mittel (51) zum Bestimmen eines numerischen Werts (Ipv), der einer Vielzahl von Aufnahmen des Kurzschlussstroms (Icc) entspricht, zum einen zumindest ein Mittel (510) zum Umwandeln jedes aufgenommenen Kurzschlussstroms (Icc) in eine Spannung (Vcc), zum anderen zumindest ein Mittel (511) zum Umwandeln des analogen Signals einer solchen Spannung (Vcc) in einen numerischen Zwischenwert (Ipv'), der dieser Spannung (Vcc) entspricht, und noch zum anderen ein Mittel zur Mittelung der numerischen Zwischenwerte (Ipv'), um den numerischen Wert (Ipv), der der Vielzahl von Aufnahmen des Kurzschlußstroms (Icc) entspricht, zu erhalten, umfasst.

14. Dynamische Ausrüstung (1) nach irgendeinem der Ansprüche 9 bis 13, **dadurch gekennzeichnet, dass** sie mindestens ein Mittel (54) umfasst, das vorgesehen ist, um mindestens einen Bezugschwellenwert (Iseuil1; Iseuil2) zu parametrisieren, und aus entweder einem einstellbaren Potentiometer oder dergleichen oder einem Speicher, der mindestens einen parametrisierbaren Bezugschwellenwert (Iseuill; Iseuil2) umfasst, besteht.

15. Dynamische Ausrüstung (1) nach irgendeinem der Ansprüche 9 bis 14, **dadurch gekennzeichnet, dass** sie einen Mikrokontroller (6) umfasst, der wenigstens einen Teil des Mittels (51) zum Bestimmen eines numerischen Werts (Ipv), der mindestens einer Aufnahme des Kurzschlussstroms (Icc) entspricht, und/oder das Mittel (52) zum Vergleichen dieses bestimmten numerischen Wertes (Ipv) mit zumindest einem Bezugschwellenwert (Iseuil1; Iseuil2), sogar und je nach dem Fall das Mittel zum Steuern (53) und/oder den Speicher, der mindestens einen parametrisierbaren Bezugschwellenwert (Iseuil1; Iseuil2) umfasst, und/oder den Amplifikator (512) umfasst.

16. Dynamische Ausrüstung (1) nach irgendeinem der Ansprüche 9 bis 15, **dadurch gekennzeichnet, dass** sie ein Mittel (7), um das Mittel (50), um den Photovoltaik-Generator (3) elektrisch zu isolieren, und/oder das Mittel (51) zum Bestimmen eines numerischen Werts (Ipv) zu schützen, und zwar wenn der Kurzschlussstrom (Icc) höher als ein definierter Sollwert ist, umfasst.

## Claims

1. A method for controlling, depending on the sunshine, a dynamic system (2) a dynamic equipment (1) includes, which also includes at least one photovoltaic generator (3), at least one battery (4) for storing electrical energy supplied by the photovoltaic generator (3) and for supplying a dynamic system (2) with electrical energy, and at least one device (5) for controlling this dynamic equipment (5), this method consists in that:
- the photovoltaic generator (3) is electrically insulated from the battery (4);
- the short-circuit current (Icc) of the insulated photovoltaic generator (3) is recorded;
- from at least one record of the short-circuit current (Icc) is determined a digital value (Ipv) corresponding to this or these records of the short-circuit current (Icc) and this determined digital value (Ipv) is compared with at least one reference threshold value (Iseuil1; Iseuil2);
- when this determined digital value (Ipv) corresponds to a range of values limited by at least one such reference threshold value (Iseuil1; Iseuil2), the dynamic system (2) is controlled in order to impart to same a pattern corresponding to this range of values.

2. A method for controlling according to claim 1, wherein:
- several records of the short-circuit current (Icc) are performed, spaced in time, at the terminals of the insulated photovoltaic generator (3);
- for each record of the short-circuit current (Icc), an intermediate digital value (Ipv') corresponding to such a record of the short-circuit current (Icc) is determined;
- a digital value (Ipv) is determined by averaging the intermediate digital values (Ipv') corresponding to a plurality of these records of the short-circuit current (Icc);
- this determined digital value (Ipv) is compared with at least one reference threshold value (Iseuil1; Iseuil2);
- the dynamic system (2) is controlled based on the result of this comparison.

3. A method for controlling according to any of the preceding claims, wherein, when a digital value (Ipv), respectively an intermediate digital value (Ipv'), corresponding to a record of the short-circuit current (Icc) is determined, first of all the recorded short-circuit current (Icc) is converted into a voltage (Vcc) and is then converted into a digital value (Ipv), respectively into an intermediate digital value (Ipv') corresponding to this voltage (Vcc) and to this recorded short-circuit current (Icc), this voltage (Vcc) or an amplification of this voltage (Vcc).

4. A method for controlling according to any of the preceding claims, wherein, before comparing the determined digital value (Ipv) with at least one reference threshold value (Iseuil1; Iseuil2), such a reference threshold value (Iseuil1; Iseuil2) is parameterized by adjusting an adjustable potentiometer or by recording a reference threshold value (Iseuil1; Iseuil2) in a memory.

5. A method for controlling according to any of the preceding claims, wherein, when the short-circuit current (Icc) of the insulated photovoltaic generator (3) is recorded, the temperature of the control device (5) is also recorded and either the control of the dynamic system (2) is permitted, when this temperature is higher than a threshold temperature (Ts) or the control of this dynamic system (2) is inhibited, when this temperature is lower than this threshold temperature (Ts).

6. A method for controlling according to any of the preceding claims, wherein, before electrically insulating the photovoltaic generator (3), the protection of the means (56) for electrically insulating the photovoltaic generator (3) and/or at least part of the means (57) for determining a digital value (Ipv) corresponding to at least one record of the short-circuit current (Icc) is ensured, this when the short-circuit current (Icc) is higher than a defined set value.

7. A method for controlling according to any of the preceding claims, wherein, when the determined digital value (Ipv) is lower than a first reference threshold value (Iseuil1), the dynamic system (2) is controlled such as to impart to same a first configuration.

8. A method for controlling according to any of the preceding claims, wherein, when the determined digital value (Ipv) is higher than a first reference threshold (Iseuil1) value:
- either the dynamic system (2) is controlled such as to impart to same a second configuration, when the determined digital value (Ipv) is higher than a second reference threshold value (Iseuil2);
- or the dynamic system (2) is controlled such as to impart to same a third configuration, when the determined digital value (Ipv) is lower than the second reference threshold value (Iseuil2).

9. Dynamic equipment (1), namely for implementing the method according to any of the preceding claims, including a dynamic system (2), a photovoltaic generator (3), a battery (4) supplied with electric energy by the photovoltaic generator (3) and supplying the dynamic system (2) with electrical power, and at least one device (5) for controlling this dynamic device (1) depending on the sunshine, wherein the device (5) for controlling the dynamic equipment (1) includes at least:
- a means (50) for electrically insulating the photovoltaic generator (3) with respect to the battery (3);
- a means for recording the short-circuit current (Icc) of the photovoltaic generator (3);
- a means (51) for determining a digital value (Ipv) corresponding to at least one record of the short-circuit current (Icc);
- a means (52) for comparing this determined digital value (Ipv) with at least one reference threshold value (Iseuil1; Iseuil2);
- a means (53) for controlling at least said means (50) for insulating said means (51) for determining a digital value (Ipv) as well as said means (52) for comparing;
- a means for controlling the dynamic system (2) based on the result of the comparison between this determined digital value (Ipv) and at least one such reference threshold value (Iseuil1; Iseuil2).

10. Dynamic equipment (1) according to claim 9, wherein the means (50) for electrically insulating the photovoltaic generator (3) is formed at least partly by an electromechanical relay interposed between the photovoltaic generator (3) and the battery (4), and including a resting contact and a coil supplied with current by the battery (4).

11. Dynamic equipment (1) according to claim 9, wherein the means (50) for electrically insulating the photovoltaic generator (3) includes, on the one hand, a diode with very low leakage current interposed between the photovoltaic generator (3) and the battery (4) and, on the other hand, a switching transistor implanted upstream of said diode.

12. Dynamic equipment (1) according to any of claims 9 to 11, wherein the means (51) for determining a digital value (Ipv) corresponding to a record of the short-circuit current (Icc) includes, on the one hand, at least one means (510) for converting the recorded short-circuit current (Icc) into a voltage (Vcc) and, on the other hand, at least one means (511) for converting the analog signal of such a voltage (Vcc) into a digital value (Ipv) corresponding to this voltage (Vcc).

13. Dynamic equipment (1) according to any one of claims 9 to 12, wherein the means (51) for determining a digital value (Ipv) corresponding to a plurality of records of the short-circuit current (Icc) includes, on the one hand, at least one means (510) for converting each recorded short-circuit current (Icc) into a voltage (Vcc), on the other hand, at least one means (511) for converting the analog signal of such an voltage (Vcc) into an intermediate digital value (Ipv') corresponding to this voltage (Vcc) and yet on the other hand, a means for averaging the intermediate digital values (Ipv'), in order to obtain the digital value (Ipv) corresponding to the plurality of records of the short-circuit current (Icc).

14. Dynamic equipment (1) according to any of claims 9 to 13, wherein it includes at least one means (54) designed such as to parameterize at least one reference threshold value (Iseuil1; Iseuil2) and formed either by an adjustable potentiometer or the like, or by a memory incorporating at least one parameterizable reference threshold value (Iseuil1; Iseuil2).

15. Dynamic equipment (1) according to any of claims 9 to 14, wherein in that it comprises a microcontroller (6) incorporating at least part of the means (51) for determining a digital value (Ipv) corresponding to at least one record of the short-circuit current (Icc) and/or the means (52) for comparing the determined digital value (Ipv) with at least one reference threshold value (Iseuil1; Iseuil2), even and as the case may be, the means for controlling (53) and/or the memory incorporating at least one parameterizable reference threshold value (Iseuil1; Iseuil2) and/or the amplifier (512).

16. Dynamic equipment (1) according to any of claims 9 to 15, wherein it includes a means (7) for protecting the means (50) for electrically insulating the photovoltaic generator (3) and/or the means (51) for determining a digital value (Ipv), this when the short-circuit current (Icc) is higher than a defined set value.
